(19) Europäisches Patentamt / European Patent Office / Office européen des brevets

(11) **EP 4 187 827 A1**

(12) **EUROPEAN PATENT APPLICATION**
published in accordance with Art. 153(4) EPC

(43) Date of publication:
**31.05.2023 Bulletin 2023/22**

(21) Application number: **20948216.5**

(22) Date of filing: **06.08.2020**

(51) International Patent Classification (IPC):
**H04L 5/00** *(2006.01)*    **H04W 72/12** *(2023.01)*

(52) Cooperative Patent Classification (CPC):
**H04L 5/00; H04W 72/12**

(86) International application number:
**PCT/CN2020/107562**

(87) International publication number:
**WO 2022/027508 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **HUA, Meng**
  **Shenzhen, Guangdong 518129 (CN)**
• **GAO, Fei**
  **Shenzhen, Guangdong 518129 (CN)**
• **LI, Xinxian**
  **Shenzhen, Guangdong 518129 (CN)**
• **PENG, Jinlin**
  **Shenzhen, Guangdong 518129 (CN)**
• **WANG, Yi**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **RESOURCE SCHEDULING METHOD AND COMMUNICATION APPARATUS**

(57) This application provides a resource scheduling method. The method includes: A terminal device receives first configuration information sent by a network side device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and the first cell and the second cell belong to a same cell group, where the first cell is a secondary cell in the cell group, and the second cell is a primary cell in the cell group; or the first cell is a secondary cell in the cell group, and the second cell is another secondary cell in the cell group. According to this application, resources in a primary cell can be scheduled by using a secondary cell, thereby improving scheduling flexibility.

FIG. 2

**Description**

**TECHNICAL FIELD**

This application relates to the field of communication technologies, and specifically, to a resource scheduling method and a communication apparatus.

**BACKGROUND**

A physical downlink control channel (physical downlink control channel, PDCCH) in new radio (new radio, NR) may carry downlink control information (downlink control information, DCI), and the DCI includes resource scheduling information on one or more terminal devices and other control information. For cell-level scheduling, a cyclic redundancy check (cyclic redundancy check, CRC) of DCI may be scrambled by using a radio network temporary identifier (radio network temporary identity, RNTI), and scheduling content types of the scrambled DCI are distinguished by using different RNTIs, for example, an SI-RNTI (system information RNTI) corresponding to system information and a P-RNTI (paging RNTI) corresponding to paging (paging).

Currently, in resource scheduling, DCI of resources in a scheduling cell is generally carried on a PDCCH candidate of the scheduling cell or a PDCCH candidate of a primary cell, which has relatively low scheduling flexibility.

**SUMMARY**

This application provides a resource scheduling method and a communication apparatus, to schedule resources of a primary cell by using a secondary cell, thereby improving scheduling flexibility.

A first aspect of this application provides a resource scheduling method, and the method includes: A terminal device receives first configuration information sent by a network side device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and the first cell and the second cell belong to a same cell group, where the first cell is a secondary cell in the cell group, and the second cell is a primary cell in the cell group; or the first cell is a secondary cell in the cell group, and the second cell is another secondary cell in the cell group. Based on the method described in the first aspect, the terminal device may monitor, in the secondary cell, a PDCCH candidate that carries DCI of the primary cell or another secondary cell, and schedule the primary cell or the another secondary cell by using the secondary cell, thereby improving scheduling flexibility and balancing scheduling load of the network side device.

In a possible implementation, a first search space set SS set is configured on the first cell, and at least one PDCCH candidate in the first SS set is used for carrying the DCI of the second cell; when the cell group is a master cell group MCG, the first cell is at least one secondary cell SCell in the cell group, and the second cell is a primary cell PCell in the cell group, the first SS set does not belong to a Type0-PDCCH CSS set, a TypeOA-PDCCH CSS set, a Type1-PDCCH CSS set, and a Type2-PDCCH CSS set; and/or when the cell group is a secondary cell group SCG, the first cell is at least one secondary cell SCell in the cell group, and the second cell is a primary secondary cell PSCell in the cell group, the first SS set does not belong to the Type1-PDCCH CSS set and the Type2-PDCCH CSS set. The first SS set may be a USS. Based on this possible implementation, DCI related to a non-broadcast channel of the primary cell, for example, dedicated DCI of the terminal device, may be carried on a PDCCH candidate of the secondary cell, thereby saving scheduling resources in the primary cell.

In a possible implementation, the terminal device further receives second configuration information sent by the network side device, where the second configuration information is used for configuring positions of resources of PDCCH candidates of the second cell, and the downlink control information DCI of the second cell is carried on at least one PDCCH candidate of the configured PDCCH candidates of the second cell. Based on this possible implementation, the primary cell or another secondary cell is scheduled by using the secondary cell and the primary cell, thereby balancing scheduling load of the network side device.

In a possible implementation, a second SS set is configured on the second cell, where at least one PDCCH candidate in the second SS set is used for carrying the DCI of the second cell; when the cell group is an MCG, the first cell is at least one SCell in the cell group, and the second cell is a PCell in the cell group, the second SS set belongs to at least one of the Type0-PDCCH CSS set, the TypeOA-PDCCH CSS set, the Type1-PDCCH CSS set, and the Type2-PDCCH CSS set; and/or when the cell group is an SCG, the first cell is at least one SCell in the cell group, and the second cell is a PSCell in the cell group, the second SS set belongs to at least one of the Type1-PDCCH CSS set and the Type2-PDCCH CSS set. Based on this possible implementation, DCI related to a broadcast channel of the primary cell may be carried on a PDCCH candidate of the primary cell, and DCI related to a non-broadcast channel may be carried on a PDCCH candidate of the secondary cell or the primary cell, thereby balancing scheduling load of the network side device.

In a possible implementation, a first search space set SS set is configured on the first cell, where at least one PDCCH candidate in the first SS set is used for carrying the DCI of the second cell; when the cell group is an MCG, the first cell is at least one SCell in the cell group, and the second cell is a PCell in the cell group, the first SS set belongs to at least one of a Type0-PDCCH CSS set, a TypeOA-PDCCH CSS set, a Typel-PDCCH CSS set, and a Type2-PDCCH CSS set; and/or when the cell group is an SCG, the first cell is at least one SCell in the cell group, and the second cell is a PSCell in the cell group, the first SS set belongs to at least one of the Typel-PDCCH CSS set and the Type2-PDCCH CSS set. Based on this possible implementation, DCI related to a broadcast channel of the primary cell is carried on a PDCCH candidate of the secondary cell, thereby improving scheduling flexibility.

In a possible implementation, a first radio network temporary identifier RNTI is configured, where the first RNTI is used for scrambling a cyclic redundancy check CRC of the DCI of the second cell carried on the at least one PDCCH candidate of the first cell; when the cell group is a master cell group MCG, the first cell is at least one secondary cell SCell in the cell group, and the second cell is a primary cell PCell in the cell group, the first RNTI does not belong to an SI-RNTI, a P-RNTI, an RA-RNTI, and a TC-RNTI; and/or when the cell group is a secondary cell group SCG, the first cell is at least one secondary cell SCell in the cell group, and the second cell is a primary secondary cell PSCell in the cell group, the first RNTI does not belong to the RA-RNTI and the TC-RNTI. The first RNTI may be one of a C-RNTI, an MCS-C-RNTI, and a CS-RNTI. Based on this possible implementation, DCI related to a non-broadcast channel of the primary cell, for example, dedicated DCI of the terminal device, may be carried on a PDCCH candidate of the secondary cell, thereby saving scheduling resources in the primary cell.

In a possible implementation, the terminal device further receives second configuration information sent by the network side device, where the second configuration information is used for configuring positions of resources of PDCCH candidates of the second cell, and the downlink control information DCI of the second cell is carried on at least one PDCCH candidate of the configured PDCCH candidates of the second cell. Based on this possible implementation, the primary cell or another secondary cell is scheduled by using the secondary cell and the primary cell, thereby balancing scheduling load of the network side device.

In a possible implementation, a second RNTI is configured, where the second RNTI is used for scrambling a CRC of the DCI of the second cell carried on the at least one PDCCH candidate of the second cell; when the cell group is an MCG, the first cell is at least one SCell in the cell group, and the second cell is a PCell in the cell group, the second RNTI belongs to at least one of an SI-RNTI, a P-RNTI, an RA-RNTI, and a TC-RNTI; and/or when the cell group is an SCG, the first cell is at least one SCell in the cell group, and the second cell is a PSCell in the cell group, the second RNTI belongs to at least one of the RA-RNTI and the TC-RNTI. Based on this possible implementation, DCI related to a broadcast channel of the primary cell may be carried on a PDCCH candidate of the primary cell, and DCI related to a non-broadcast channel may be carried on a PDCCH candidate of the secondary cell or the primary cell, thereby balancing scheduling load of the network side device.

In a possible implementation, a first RNTI is configured, where the first RNTI is used for scrambling a cyclic redundancy check CRC of the DCI of the second cell carried on the at least one PDCCH candidate of the first cell; when the cell group is an MCG, the first cell is at least one SCell in the cell group, and the second cell is a PCell in the cell group, the first RNTI belongs to at least one of an SI-RNTI, a P-RNTI, an RA-RNTI, and a TC-RNTI; and/or when the cell group is an SCG, the first cell is at least one SCell in the cell group, and the second cell is a PSCell in the cell group, the first RNTI belongs to at least one of the RA-RNTI and the TC-RNTI. Based on this possible implementation, DCI related to a broadcast channel of the primary cell is carried on a PDCCH candidate of the secondary cell, thereby improving scheduling flexibility.

In a possible implementation, when the first cell is a secondary cell in the cell group and the second cell is a primary cell in the cell group, all PDCCH candidates that are capable of carrying the DCI of the second cell are in the first cell. Based on this possible implementation, the terminal device does not need to receive a PDCCH in the primary cell, so that power consumption of the terminal device can be reduced.

In a possible implementation, a quantity of PDCCH candidates that are configured in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device. Based on this possible implementation, working complexity of the terminal device in determining a PDCCH candidate that needs to be monitored is reduced.

In a possible implementation, a quantity of PDCCH candidates that are configured in any unit time of the first cell and that carry the DCI of the second cell is allowed to be greater than a PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device; and/or a quantity of PDCCH candidates that are configured in any unit time of the second cell and that carry the DCI of the second cell is allowed to be greater than the PDCCH candidate monitoring capability of the terminal device, and/or a quantity of non-overlapping control channel elements related to the PDCCH candidates that are configured in any unit time of the second cell and that carry the DCI of the second cell is allowed to be greater than the PDCCH candidate monitoring capability of the terminal device. Based on this possible implementation, PDCCH configuration flexibility is improved.

In a possible implementation, a sum of a quantity of PDCCH candidates that are configured in any unit time of the first cell and that carry the DCI of the second cell and a quantity of PDCCH candidates that are configured in any unit time of the second cell and that carry the DCI of the second cell is allowed to be greater than a PDCCH candidate monitoring capability of the terminal device; and/or a sum of a quantity of non-overlapping control channel elements related to the PDCCH candidates that are configured in any unit time of the first cell and that carry the DCI of the second cell and a quantity of non-overlapping control channel elements related to the PDCCH candidates that are configured in any unit time of the second cell and that carry the DCI of the second cell is allowed to be greater than the PDCCH candidate monitoring capability of the terminal device. Based on this possible implementation, PDCCH configuration flexibility is improved.

In a possible implementation, the terminal device receives first indication information sent by the network side device, where if the first indication information indicates a first value, the first indication information indicates that a quantity of PDCCH candidates that are configured by the terminal device in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device; and if the first indication information indicates a second value, the first indication information indicates that the quantity of PDCCH candidates that are configured by the terminal device in any unit time of the first cell and that carry the DCI of the second cell is allowed to be greater than the PDCCH candidate monitoring capability of the terminal device, and/or the quantity of non-overlapping control channel elements related to the PDCCH candidates that are configured in any unit time of the first cell and that carry the DCI of the second cell is allowed to be greater than the PDCCH candidate monitoring capability of the terminal device. Based on this possible implementation, working complexity of the terminal device is reduced, and PDCCH configuration flexibility is improved.

In a possible implementation, the downlink control information DCI of the second cell is carried on at least one PDCCH candidate of the configured PDCCH candidates of the first cell and the configured PDCCH candidates of the second cell; and it is preset in a protocol that the terminal device configures the first cell and the second cell as $r$ cells to perform PDCCH candidate monitoring capability allocation, where $r$ is a positive number, for example, $r$ is 1 or 2.

In a possible implementation, the downlink control information DCI of the second cell is carried on at least one PDCCH candidate of the configured PDCCH candidates of the first cell and the configured PDCCH candidates of the second cell; and it is preset in a protocol that the terminal device configures the first cell as $r_1$ cells to perform PDCCH candidate monitoring capability allocation, and configures the second cell as $r_2$ cells to perform PDCCH candidate monitoring capability allocation, where $r_1$ and $r_2$ are positive numbers and may be the same or different, for example, $r_1$ is 1, and $r_2$ is 1.

In a possible implementation, the downlink control information DCI of the second cell is carried on at least one PDCCH candidate of the configured PDCCH candidates of the first cell and the configured PDCCH candidates of the second cell; when subcarrier spacings of downlink active BWPs of the first cell and the second cell are the same, it is preset in a protocol that the terminal device configures the first cell and the second cell as $r$ cells to perform PDCCH candidate monitoring capability allocation, where $r$ is a positive number, for example, $r$ is 1 or 2; and when the subcarrier spacings of the downlink active BWPs of the first cell and the second cell are different, it is preset in a protocol that the terminal device configures the first cell as $r_1$ cells to perform PDCCH candidate monitoring capability allocation, and configures the second cell as $r_2$ cells to perform PDCCH candidate monitoring capability allocation, where $r_1$ and $r_2$ are positive numbers and may be the same or different, for example, $r_1$ is 1, and $r_2$ is 1.

In a possible implementation, the downlink control information DCI of the second cell is carried on at least one PDCCH candidate of the configured PDCCH candidates of the first cell and the configured PDCCH candidates of the second cell; and the terminal device receives first parameter information sent by the network side device, where the first parameter information is used for configuring the first cell and the second cell as $r$ cells to perform PDCCH candidate monitoring capability allocation, and $r$ is a positive number. The network side device may determine $r$ according to a load status of a cell, to balance load.

In a possible implementation, the terminal device reports capability information to the network side device, or does not report the capability information when a capability parameter is a preset value, so that the network side device determines a capability parameter R based on the report of the terminal device, or determines the capability parameter R based on the preset value, where R is used for determining $r$, and a value of $r$ is less than or equal to the capability parameter R of the terminal device. Based on this possible implementation, the network side device determines PDCCH candidate monitoring capability allocation based on the capability information reported by the terminal device, so that the terminal device can more easily monitor a PDCCH candidate of the terminal device.

In a possible implementation, the downlink control information DCI of the second cell is carried on at least one PDCCH candidate of the configured PDCCH candidates of the first cell and the configured PDCCH candidates of the second cell; and the terminal device receives second parameter information sent by the network side device, where the second parameter information is used for configuring the first cell as $r_1$ cells to perform PDCCH candidate monitoring capability allocation, and configuring the second cell as $r_2$ cells to perform PDCCH candidate monitoring capability allocation, where $r_1$ and $r_2$ are positive numbers and may be the same or different. The network side device may determine $r_1$ and $r_2$ according to a load status of a cell, to balance load.

In a possible implementation, the terminal device reports capability information to the network side device, or does not report the capability information when a capability parameter is a preset value, so that the network side device determines a capability parameter R based on the report of the terminal device, or determines the capability parameter R based on the preset value, where R is used for determining $r_1$ and $r_2$ For example, $r_1+r_2$ is greater than or equal to 1 and is less than or equal to R. Based on this possible implementation, the network side device determines PDCCH candidate monitoring capability allocation based on the capability information reported by the terminal device, so that the terminal device can more easily monitor a PDCCH candidate of the terminal device.

In a possible implementation, the terminal device reports capability information to the network side device, or does not report the capability information when a capability parameter is a preset value, so that the network side device determines capability parameters R1 and R2 based on the report of the terminal device, or determines the capability parameters R1 and R2 based on the preset value, where R1 and R2 are used for determining $r_1$ and $r_2$ . For example, $r_1$ is greater than or equal to R1 and is less than or equal to 1, and $r_2$ is greater than or equal to R2 and is less than or equal to 1; or $r_1$ is less than or equal to R1 and $r_2$ is less than or equal to R2. Based on this possible implementation, the network side device determines PDCCH candidate monitoring capability allocation based on the capability information reported by the terminal device, so that the terminal device can more easily monitor a PDCCH candidate of the terminal device.

In a possible implementation, the terminal device reports capability information to the network side device, or does not report the capability information when a capability parameter is a preset value, so that the network side device determines a capability parameter R1 based on the report of the terminal device, or determines the capability parameter R1 based on the preset value, where R1 is used for determining $r_1$ and $r_2$. For example, $r_1$ is greater than or equal to R1 and is less than or equal to 1, and $r_2$ is greater than or equal to R1 and is less than or equal to 1; or $r_1$ is less than or equal to R1 and $r_2$ is less than or equal to R1. Based on this possible implementation, the network side device determines PDCCH candidate monitoring capability allocation based on the capability information reported by the terminal device, so that the terminal device can more easily monitor a PDCCH candidate of the terminal device. In a possible implementation, a subcarrier spacing of an active bandwidth part BWP of the first cell is $\mu_1$, and a PDCCH candidate of the first cell that is available for carrying the DCI of the second cell is used as $r_1$ cells whose subcarrier spacing is $\mu_1$ to perform PDCCH candidate monitoring capability allocation; and a subcarrier spacing of an active bandwidth part BWP of the second cell is , and a PDCCH candidate of the second cell that is available for carrying the DCI of the second cell is used as $r_2$ cells whose subcarrier spacing is $\mu_2$ to perform PDCCH candidate monitoring capability allocation, where $\mu_1$ and $\mu_2$ are equal or not equal. Based on this possible implementation, the terminal device can monitor a PDCCH candidate of the terminal device more easily.

In a possible implementation, the downlink control information DCI of the second cell is carried on at least one PDCCH candidate of the configured PDCCH candidates of the first cell and the configured PDCCH candidates of the second cell, and the configured PDCCH candidates are allowed to be greater than a PDCCH candidate monitoring capability of the terminal device. The terminal device sorts each search space in terminal device-specific search space USS of the second cell and the first cell in a cell group that includes a PDCCH candidate that can be used for carrying the downlink control information DCI of the second cell, and determines a priority of each search space in PDCCH candidate monitoring capability allocation based on a sorting result. Based on this possible implementation, the terminal device can receive, based on a priority, a PDCCH in USS with a higher priority, thereby improving user experience. That the configured PDCCH candidates are allowed to be greater than a PDCCH candidate monitoring capability of the terminal device means that a quantity of PDCCH candidates that are configured in any unit time of the first cell and that carry the DCI of the second cell is allowed to be greater than the PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device. Based on this possible implementation, the terminal device can receive, based on a priority, a PDCCH in USS with a higher priority, thereby improving user experience.

In a possible implementation, the downlink control information DCI of the second cell is carried on at least one PDCCH candidate of the configured PDCCH candidates of the first cell and the configured PDCCH candidates of the second cell, the configured PDCCH candidates are allowed to be greater than a PDCCH candidate monitoring capability of the terminal device, and the terminal device determines priorities of search spaces of the first cell and the second cell in a cell group that includes a PDCCH candidate that can be used for carrying the downlink control information DCI of the second cell. A priority of each search space in a terminal device-specific search space USS of the first cell is higher than a priority of each search space in a USS of the second cell; or the priority of each search space in the terminal device-specific search space USS of the second cell is higher than the priority of each search space in the USS of the first cell; or in the USSs of the first cell and the second cell, a smaller index value corresponding to a search space indicates a higher priority of the search space, and in search spaces with a same index value, a priority of a search space in the USS of the first cell is higher than a priority of a search space in the USS of the second cell; or in the USSs of the first cell and the second cell, a smaller index value corresponding to a search space indicates a higher priority of the search space, and in search spaces with a same index value, a priority of a search space in the USS of the second cell is higher than a priority of a search space in the USS of the first cell; or in search spaces in the USS of the first cell and search spaces in the USS of the second cell, a smaller index value corresponding to a search space indicates a higher priority of the search space, where the network-side device ensures that index values of the search spaces in the USS of the first cell and the search spaces in the USS of the second cell that include a PDCCH candidate that can be used for carrying the downlink control information DCI of the second cell are different from each other. The terminal device determines, based on the priorities, a PDCCH candidate that can send the DCI of the second cell in the configured PDCCH candidates. Based on this possible implementation, the terminal device can receive, based on a priority, a PDCCH in USS with a higher priority, thereby improving user experience.

A second aspect of this application provides a resource scheduling method, and the method includes: A network side device sends first configuration information to a terminal device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and the first cell and the second cell belong to a same cell group, where the first cell is a secondary cell in the cell group, and the second cell is a primary cell in the cell group; or the first cell is a secondary cell in the cell group, and the second cell is another secondary cell in the cell group; or the first cell is a primary cell in the cell group, and the second cell is a secondary cell in the cell group.

In a possible implementation, a first search space set SS set is configured on the first cell, and at least one PDCCH candidate in the first SS set is used for carrying the DCI of the second cell; when the cell group is a master cell group MCG, the first cell is at least one secondary cell SCell in the cell group, and the second cell is a primary cell PCell in the cell group, the first SS set does not belong to a Type0-PDCCH CSS set, a Type0A-PDCCH CSS set, a Type1-PDCCH CSS set, and a Type2-PDCCH CSS set; and/or when the cell group is a secondary cell group SCG, the first cell is at least one secondary cell SCell in the cell group, and the second cell is a primary secondary cell PSCell in the cell group, the first SS set does not belong to the Type1-PDCCH CSS set and the Type2-PDCCH CSS set. The first SS set may be a USS.

In a possible implementation, the network side device sends second configuration information to the terminal device, where the second configuration information is used for configuring positions of resources of PDCCH candidates of the second cell, and the downlink control information DCI of the second cell is carried on at least one PDCCH candidate of the configured PDCCH candidates of the second cell.

In a possible implementation, a second SS set is configured on the second cell, where at least one PDCCH candidate in the second SS set is used for carrying the DCI of the second cell; when the cell group is an MCG, the first cell is at least one SCell in the cell group, and the second cell is a PCell in the cell group, the second SS set belongs to at least one of the Type0-PDCCH CSS set, the Type0A-PDCCH CSS set, the Type1-PDCCH CSS set, and the Type2-PDCCH CSS set; and/or when the cell group is an SCG, the first cell is at least one SCell in the cell group, and the second cell is a PSCell in the cell group, the second SS set belongs to at least one of the Type1-PDCCH CSS set and the Type2-PDCCH CSS set.

In a possible implementation, a first search space set SS set is configured on the first cell, where at least one PDCCH candidate in the first SS set is used for carrying the DCI of the second cell; when the cell group is an MCG, the first cell is at least one SCell in the cell group, and the second cell is a PCell in the cell group, the first SS set belongs to at least one of a Type0-PDCCH CSS set, a Type0A-PDCCH CSS set, a Type1-PDCCH CSS set, and a Type2-PDCCH CSS set; and/or when the cell group is an SCG, the first cell is at least one SCell in the cell group, and the second cell is a PSCell in the cell group, the first SS set belongs to at least one of the Type1-PDCCH CSS set and the Type2-PDCCH CSS set.

In a possible implementation, a first radio network temporary identifier RNTI is configured, where the first RNTI is used for scrambling a cyclic redundancy check CRC of the DCI of the second cell carried on the at least one PDCCH candidate of the first cell; when the cell group is a master cell group MCG, the first cell is at least one secondary cell SCell in the cell group, and the second cell is a primary cell PCell in the cell group, the first RNTI does not belong to an SI-RNTI, a P-RNTI, an RA-RNTI, and a TC-RNTI; and/or when the cell group is a secondary cell group SCG, the first cell is at least one secondary cell SCell in the cell group, and the second cell is a primary secondary cell PSCell in the cell group, the first RNTI does not belong to the RA-RNTI and the TC-RNTI. The first RNTI may be one of a C-RNTI, an MCS-C-RNTI, and a CS-RNTI. In a possible implementation, a second RNTI is configured, where the second RNTI is used for scrambling a CRC of the DCI of the second cell carried on the at least one PDCCH candidate of the second cell; when the cell group is an MCG, the first cell is at least one SCell in the cell group, and the second cell is a PCell in the cell group, the second RNTI belongs to at least one of an SI-RNTI, a P-RNTI, an RA-RNTI, and a TC-RNTI; and/or when the cell group is an SCG, the first cell is at least one SCell in the cell group, and the second cell is a PSCell in the cell group, the second RNTI belongs to at least one of the RA-RNTI and the TC-RNTI.

In a possible implementation, a first RNTI is configured, where the first RNTI is used for scrambling a CRC of the DCI of the second cell carried on the at least one PDCCH candidate of the first cell; when the cell group is an MCG, the first cell is at least one SCell in the cell group, and the second cell is a PCell in the cell group, the first RNTI belongs to at least one of an SI-RNTI, a P-RNTI, an RA-RNTI, and a TC-RNTI; and/or when the cell group is an SCG, the first cell is at least one SCell in the cell group, and the second cell is a PSCell in the cell group, the first RNTI belongs to at least one of the RA-RNTI and the TC-RNTI.

In a possible implementation, when the first cell is a secondary cell in the cell group and the second cell is a primary cell in the cell group, all PDCCH candidates that are capable of carrying the DCI of the second cell are in the first cell. In a possible implementation, a quantity of PDCCH candidates that are configured in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device.

In a possible implementation, a quantity of PDCCH candidates that are configured in any unit time of the first cell and that carry the DCI of the second cell is allowed to be greater than a PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device; and/or a quantity of PDCCH candidates that are configured in any unit time of the second cell and that carry the DCI of the second cell is allowed to be greater than the PDCCH candidate monitoring capability of the terminal device, and/or a quantity of non-overlapping control channel elements related to the PDCCH candidates that are configured in any unit time of the second cell and that carry the DCI of the second cell is allowed to be greater than the PDCCH candidate monitoring capability of the terminal device.

In a possible implementation, a sum of a quantity of PDCCH candidates that are configured in any unit time of the first cell and that carry the DCI of the second cell and a quantity of PDCCH candidates that are configured in any unit time of the second cell and that carry the DCI of the second cell is allowed to be greater than a PDCCH candidate monitoring capability of the terminal device; and/or a sum of a quantity of non-overlapping control channel elements related to the PDCCH candidates that are configured in any unit time of the first cell and that carry the DCI of the second cell and a quantity of non-overlapping control channel elements related to the PDCCH candidates that are configured in any unit time of the second cell and that carry the DCI of the second cell is allowed to be greater than the PDCCH candidate monitoring capability of the terminal device.

In a possible implementation, the network side device sends first indication information to the terminal device, where if the first indication information indicates a first value, the first indication information indicates that a quantity of PDCCH candidates that are configured by the terminal device in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device; and if the first indication information indicates a second value, the first indication information indicates that the quantity of PDCCH candidates that are configured by the terminal device in any unit time of the first cell and that carry the DCI of the second cell is allowed to be greater than the PDCCH candidate monitoring capability of the terminal device, and/or the quantity of non-overlapping control channel elements related to the PDCCH candidates that are configured in any unit time of the first cell and that carry the DCI of the second cell is allowed to be greater than the PDCCH candidate monitoring capability of the terminal device.

In a possible implementation, the downlink control information DCI of the second cell is carried on at least one PDCCH candidate of the configured PDCCH candidates of the first cell and the configured PDCCH candidates of the second cell; and it is preset in a protocol that the terminal device configures the first cell and the second cell as $r$ cells to perform PDCCH candidate monitoring capability allocation, where $r$ is a positive number, for example, $r$ is 1 or 2.

In a possible implementation, the downlink control information DCI of the second cell is carried on at least one PDCCH candidate of the configured PDCCH candidates of the first cell and the configured PDCCH candidates of the second cell; and it is preset in a protocol that the terminal device configures the first cell as $r_1$ cells to perform PDCCH candidate monitoring capability allocation, and configures the second cell as $r_2$ cells to perform PDCCH candidate monitoring capability allocation, where $r_1$ and $r_2$ are positive numbers and may be the same or different, for example, $r_1$

is 1, and $r_2$ is 1.

In a possible implementation, the downlink control information DCI of the second cell is carried on at least one PDCCH candidate of the configured PDCCH candidates of the first cell and the configured PDCCH candidates of the second cell; when subcarrier spacings of downlink active BWPs of the first cell and the second cell are the same, it is preset in a protocol that the terminal device configures the first cell and the second cell as $r$ cells to perform PDCCH candidate monitoring capability allocation, where $r$ is a positive number, for example, $r$ is 1 or 2; and when the subcarrier spacings of the downlink active BWPs of the first cell and the second cell are different, it is preset in a protocol that the terminal device configures the first cell as $r_1$ cells to perform PDCCH candidate monitoring capability allocation, and configures the second cell as $r_2$ cells to perform PDCCH candidate monitoring capability allocation, where $r_1$ and $r_2$ are positive numbers and may be the same or different, for example, $r_1$ is 1, and $r_2$ is 1.

In a possible implementation, the downlink control information DCI of the second cell is carried on at least one PDCCH candidate of the configured PDCCH candidates of the first cell and the configured PDCCH candidates of the second cell; and the network side device sends first parameter information to the terminal device, where the first parameter information is used for configuring the first cell and the second cell as $r$ cells to perform PDCCH candidate monitoring capability allocation, and $r$ is a positive number.

In a possible implementation, a capability parameter R of the terminal device is determined based on the report of the terminal device, or the capability parameter R of the terminal device is determined based on a preset value, where R is used for determining $r$ , and a value of $r$ is less than or equal to the capability parameter R.

In a possible implementation, the downlink control information DCI of the second cell is carried on at least one PDCCH candidate of the configured PDCCH candidates of the first cell and the configured PDCCH candidates of the second cell; and the network side device sends second parameter information to the terminal device, where the second parameter information is used for configuring the first cell as $r_1$ cells to perform PDCCH candidate monitoring capability allocation, and configuring the second cell as $r_2$ cells to perform PDCCH candidate monitoring capability allocation, where $r_1$ and $r_2$ are positive numbers.

In a possible implementation, the capability parameter R is determined based on the report of the terminal device, or the capability parameter R is determined based on a preset value, where $r_1 + r_2$ is greater than or equal to 1 and is less than or equal to R.

In a possible implementation, the terminal device determines capability parameters R1 and R2 based on capability information reported by the terminal device, or determines the capability parameters R1 and R2 based on a preset value, where R1 and R2 are used for determining $r_1$ and $r_2$ For example, $r_1$ is greater than or equal to R1 and is less than or equal to 1, and $r_2$ is greater than or equal to R2 and is less than or equal to 1; or $r_1$ is less than or equal to R1 and $r_2$ is less than or equal to R2.

In a possible implementation, the terminal device determines a capability parameter R1 based on the report of the terminal device, or determines the capability parameter R1 based on a preset value, where R1 is used for determining $r_1$ and $r_2$. For example, $r_1$ is greater than or equal to R1 and is less than or equal to 1, and $r_2$ is greater than or equal to R1 and is less than or equal to 1; or $r_1$ is less than or equal to R1 and $r_2$ is less than or equal to R1.

In a possible implementation, a subcarrier spacing of an active bandwidth part BWP of the first cell is $\mu_1$, and a PDCCH candidate of the first cell that is available for carrying the DCI of the second cell is used as $r_1$ cells whose subcarrier spacing is $\mu_1$ to perform PDCCH candidate monitoring capability allocation; and a subcarrier spacing of an active bandwidth part BWP of the second cell is $\mu_2$, and a PDCCH candidate of the second cell that is available for carrying the DCI of the second cell is used as $r_2$ cells whose subcarrier spacing is $\mu_2$ to perform PDCCH candidate monitoring capability allocation, where $\mu_1$ and $\mu_2$ are equal or not equal.

In a possible implementation, the downlink control information DCI of the second cell is carried on at least one PDCCH candidate of the configured PDCCH candidates of the first cell and the configured PDCCH candidates of the second cell, and the configured PDCCH candidates are allowed to be greater than a PDCCH candidate monitoring capability of the terminal device. Each search space in terminal device-specific search space USS of the second cell and the first cell in a cell group that includes a PDCCH candidate that can be used for carrying the downlink control information DCI of the second cell is sorted, and a priority of each search space in PDCCH candidate monitoring capability allocation is determined based on a sorting result. A PDCCH candidate that is in the configured PDCCH candidates and that can send the DCI of the second cell is determined based on the priority.

In a possible implementation, the downlink control information DCI of the second cell is carried on at least one PDCCH candidate of the configured PDCCH candidates of the first cell and the configured PDCCH candidates of the second cell, the configured PDCCH candidates are allowed to be greater than a PDCCH candidate monitoring capability of the terminal device, and priorities of search spaces of the first cell and the second cell in a cell group that includes a PDCCH candidate that can be used for carrying the downlink control information DCI of the second cell are determined. A priority of each search space in a terminal device-specific search space USS of the first cell is higher than a priority of each search space in a USS of the second cell; or the priority of each search space in the terminal device-specific search space USS of the second cell is higher than the priority of each search space in the USS of the first cell; or in the USSs of the first cell and the second cell, a smaller index value corresponding to a search space indicates a higher priority of the search space, and in search spaces with a same index value, a priority of a search space in the USS of the first cell is higher than a priority of a search space in the USS of the second cell; or in the USSs of the first cell and the second cell, a smaller index value corresponding to a search space indicates a higher priority of the search space, and in search spaces with a same index value, a priority of a search space in the USS of the second cell is higher than a priority of a search space in the USS of the first cell; or in search spaces in the USS of the first cell and search spaces in the USS of the second cell, a smaller index value corresponding to a search space indicates a higher priority of the search space, where the network-side device ensures that index values of the search spaces in the USS of the first cell and the search spaces in the USS of the second cell that include a PDCCH candidate that can be used for carrying the downlink control information DCI of the second cell are different from each other. The terminal device determines, based on the priorities, a PDCCH candidate that can send the DCI of the second cell in the configured PDCCH candidates.

For beneficial effects of the second aspect, refer to the beneficial effects of the first aspect. Details are not described herein again.

A third aspect of this application provides a communication apparatus. The communication apparatus may be a terminal device, an apparatus in a terminal device, or an apparatus that can be used in matching with a terminal device. The communication apparatus may be a chip system. In a design, the apparatus may include a corresponding module for performing the method/operation/step/action described in the first aspect and various possible implementations, and the module may be a hardware circuit, or software, or may be implemented by a hardware circuit in combination with software. In a design, the apparatus may include a receiving module. For example,

the receiving module is configured to receive first configuration information sent by a network side device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and

the first cell and the second cell belong to a same cell group, where
the first cell is a secondary cell in the cell group, and the second cell is a primary cell in the cell group; or the first cell is a secondary cell in the cell group, and the second cell is another secondary cell in the cell group.

A fourth aspect of this application provides a communication apparatus. The apparatus includes a memory and a processor, and the memory is configured to store instructions and data. The memory is coupled to the processor, and when the processor is configured to execute the instructions stored in the memory, the apparatus may be caused to implement the method described in the first aspect and the possible implementations of the first aspect. The apparatus may further include a communication interface, where the communication interface is used by the apparatus to communicate with another device. For example, the communication interface may be a circuit hardware module such as a transceiver or a bus, and the another device may be a terminal device or the like. In a possible design, the apparatus includes:

a memory, configured to store program instructions; and
a processor, configured to receive first configuration information sent by a network side device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and the first cell and the second cell belong to a same cell group, where the first cell is a secondary cell in the cell group, and the second cell is a primary cell in the cell group; or the first cell is a secondary cell in the cell group, and the second cell is another secondary cell in the cell group.

A fifth aspect of this application provides a computer-readable storage medium, including instructions, where when the instructions are run on a computer, the computer is caused to perform the method provided in the first aspect and the possible implementations of the first aspect.

A sixth aspect of this application provides a chip system. The chip system includes a processor, and may further include a memory, configured to implement the method provided in the first aspect and the possible implementations of the first aspect. The chip system may include a chip, or include a chip and another discrete device.

A seventh aspect of this application provides a communication apparatus. The apparatus may be a network side device, or may be an apparatus in a network side device. The communication apparatus may be a chip system, or an apparatus that can be used in matching with the network side device. In a design, the apparatus may include a corresponding module for performing the method/operation/step/action described in the second aspect and the possible implementations of the second aspect, and the module may be a hardware circuit, or software, or may be implemented by a hardware circuit in combination with software. In a design, the apparatus may include a sending module. For example,

the sending module is configured to send first configuration information to a terminal device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and
the first cell and the second cell belong to a same cell group, where

the first cell is a secondary cell in the cell group, and the second cell is a primary cell in the cell group; or the first cell is a secondary cell in the cell group, and the second cell is another secondary cell in the cell group; or the first cell is a primary cell in the cell group, and the second cell is a secondary cell in the cell group.

An eighth aspect of this application provides a communication apparatus. The apparatus includes a memory and a processor, and the memory is configured to store instructions and data. The memory is coupled to the processor, and when the processor is configured to execute the instructions stored in the memory, the apparatus may be caused to implement the method described in the second aspect and the possible implementations of the second aspect. The apparatus may further include a communication interface, where the communication interface is used by the apparatus to communicate with another device. For example, the communication interface may be a circuit hardware module such as a transceiver or a bus, and the another device may be a network device or the like. In a possible design, the apparatus includes:

a memory, configured to store program instructions; and
a processor, configured to send first configuration information to a terminal device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and the first cell and the second cell belong to a same cell group, where the first cell is a secondary cell in the cell group, and the second cell is a primary cell in the cell group; or the first cell is a secondary cell in the cell group, and the second cell is another secondary cell in the cell group; or the first cell is a primary cell in the cell group, and the second cell is a secondary cell in the cell group.

A ninth aspect of this application provides a computer-readable storage medium, including instructions, where when the instructions are run on a computer, the computer is caused to perform the method provided in the second aspect and the possible implementations of the second aspect.
A tenth aspect of this application provides a chip system. The chip system includes a processor, and may further include a memory, configured to implement the method provided in the second aspect and the possible implementations of the second aspect. The chip system may include a chip, or include a chip and another discrete device.

## BRIEF DESCRIPTION OF DRAWINGS

FIG. 1(a) is a schematic diagram of a size and a position of a time-frequency resource corresponding to a possible search space set according to an embodiment of this application;
FIG. 1(b) is a schematic architectural diagram of a possible mobile communication system according to an embodiment of this application;
FIG. 2 is a schematic flowchart of a resource scheduling method according to an embodiment of this application;
FIG. 3 is a schematic diagram of a scenario of a scheduling solution according to an embodiment of this application;
FIG. 4 is a schematic diagram of a scenario of another scheduling solution according to an embodiment of this application;
FIG. 5 is a schematic diagram of a scenario of still another scheduling solution according to an embodiment of this application;
FIG. 6 is a schematic diagram of a scenario of still another scheduling solution according to an embodiment of this application;
FIG. 7 is a schematic flowchart of another resource scheduling method according to an embodiment of this application;
FIG. 8 is a schematic flowchart of still another resource scheduling method according to an embodiment of this application;

FIG. 9 is an overall schematic flowchart of a resource scheduling method according to an embodiment of this application;

FIG. 10 is a schematic structural diagram of a communication apparatus according to an embodiment of this application;

FIG. 11 is a schematic structural diagram of a terminal device according to an embodiment of this application; and

FIG. 12 shows another communication apparatus according to an embodiment of this application.

## DESCRIPTION OF EMBODIMENTS

To better understand technical solutions provided in embodiments of this application, technical terms involved in the embodiments of this application are first described.

1. Cell

A cell is described from the perspective of resource management or mobility management by a higher layer (for example, a protocol layer above a physical layer such as a radio resource control layer or a media access control layer). Coverage of each network side device may be divided into one or more cells. For example, in dual connectivity (dual connectivity, DC), a terminal device may establish links to a plurality of cells, and these cells are divided into two groups: a master cell group (master cell group, MCG) and a secondary cell group (secondary cell group, SCG). If dual connectivity is not performed, the terminal device establishes a link to a cell group in carrier aggregation of a single base station.

A primary cell in the MCG is a primary cell (primary cell, PCell), a primary cell in the SCG is a primary secondary cell (primary secondary cell, PSCell), and other cells in the MCG and the SCG are secondary cells (secondary cells, SCells). The PCell in the MCG and the SCells in the MCG may be combined by using a single-base-station carrier aggregation (carrier aggregation, CA) technology. The PSCell in the SCG and the SCells in the SCG may also be combined by using the single-base-station carrier aggregation technology.

A bandwidth part (bandwidth part, BWP) is a part of bandwidth on a carrier of a cell. The cell is a general name. For a terminal device, a cell that provides a service for the terminal device is referred to as a serving cell. The cell involved in the embodiments of this application may also be a serving cell.

In NR, one downlink carrier may be configured for one cell, and optionally, at least one uplink carrier is further configured for one cell. There are 5 subcarrier spacings (subcarrier spacings, SCSs) in NR, and sequence numbers of the subcarrier spacings are 0 to 4, which respectively correspond to 15 KHz, 30 KHz, 60 KHz, 120 KHz, and 240 KHz.

In NR, one cell may have a plurality of transmission/reception points (transmission/reception points, TRPs), which are referred to as multi-TRPs. Different TRPs have different geographical locations and are not co-sited. From the perspective of a terminal device side, statistical characteristics of channels of the plurality of TRPs are different.

2. Physical downlink control channel PDCCH and search space set

One PDCCH in NR may include L={1, 2, 4, 8, 16} control channel elements (control channel elements, CCEs). L is referred to as a PDCCH aggregation level (aggregation level, AL). One CCE includes 6 resource element groups (resource element groups, REGs), and each REG corresponds to one resource block (resource block, RB) on one orthogonal frequency division multiplexing (orthogonal frequency division multiplexing, OFDM) symbol.

One PDCCH candidate (PDCCH candidate) may include L={1, 2, 4, 8, 16} CCEs, and the CCE may or may not send a PDCCH of one terminal device. The terminal device may monitor PDCCH candidates, to determine whether a PDCCH related to the terminal device exists.

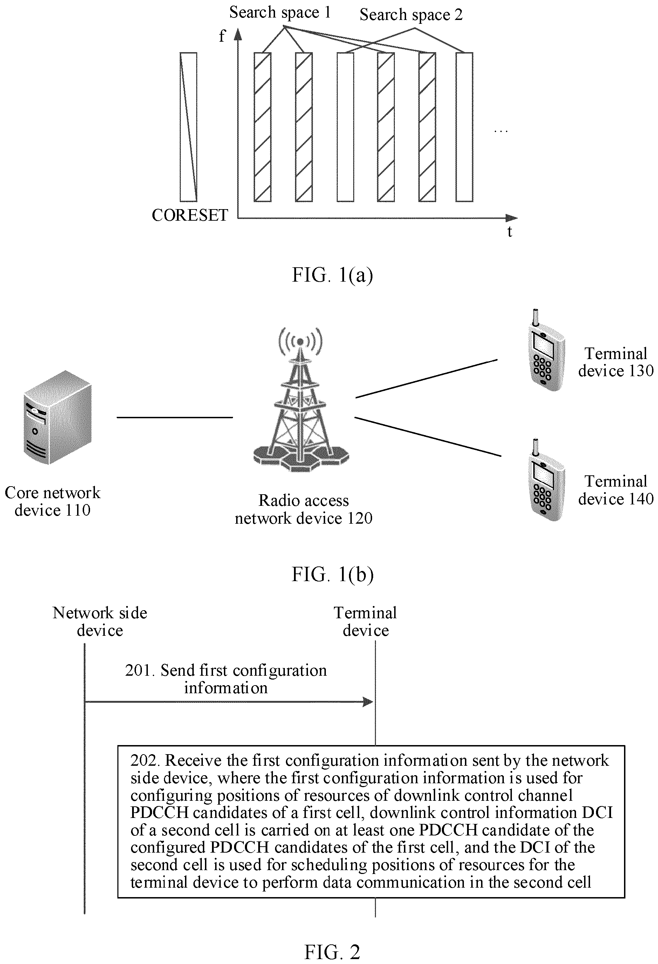

A search space (search space) whose aggregation level is L is defined as a set including several PDCCH candidates whose sizes are L control channel elements. A search space set (search space set) is a set including search spaces at different aggregation levels. One search space set is associated with one control resource set (control resource set, CORESET). One CORESET is defined in one cell, includes a group of consecutive or non-consecutive RBs in frequency domain, and includes 1/2/3 consecutive OFDM symbols in time domain. One search space set may be associated with only one CORESET, and one CORESET may be associated with a plurality of search space sets. Referring to FIG. 1(a), FIG. 1(a) is a schematic diagram of a size and a position of a time-frequency resource corresponding to a possible search space set according to an embodiment of this application. As shown in FIG. 1(a), if a CORESET is associated with two search space sets, sizes and positions of time-frequency resources respectively corresponding to the two search space sets may be determined according to a time-frequency resource parameter of the CORESET and time domain parameters of the two search space sets associated with the CORESET, where a search space set 1 corresponds to one group of resources, and a search space set 2 corresponds to one group of resources.

A search space set is configured with time domain parameters such as a periodicity and an offset. According to the time domain parameters of the search space set and a time-frequency resource parameter of a CORESET associated with the search space set, a size and a position of one group of time-frequency resources corresponding to the search space set may be determined. A search space configuration includes aggregation levels and a quantity of PDCCH candidates corresponding to each aggregation level. A position of time-frequency resources of a PDCCH candidate corresponding to the search space set may be determined based on the configuration parameters, the size and the position of the time-frequency resources corresponding to the search space set, and a rule specified in a protocol.

3. Type of search space set and corresponding downlink control information format (DCI format)

There are two types of search space sets: a common search space (common search space, CSS) and a terminal device-specific search space (UE-specific search space, USS).

A PDCCH carries downlink control information DCI, the DCI has different formats, and different DCI formats have different functions and carry different content. For example, a DCI format 0_0 and a DCI format 0_1 carry uplink scheduling, and a DCI format 1_0, a DCI format 1_1, and a DCI format 1_2 carry downlink scheduling.

DCI formats transmitted in a search space set of the CSS type include a DCI format 2_0, a DCI format 2_1, a DCI format 2_2, a DCI format 2_3, a DCI format 2_4, a DCI format 2_5, a DCI format 2_6, a DCI format 0_0, and a DCI format 1_0.

DCI formats that can be transmitted in a search space of the USS type include a DCI format 0_0, a DCI format 0_1, a DCI format 1_0, a DCI format 1_1, and a DCI format 1_2.

The PDCCH carries the DCI and a cyclic redundancy check CRC of the DCI, and the CRC may be masked by using different RNTIs. One DCI format may be masked by using different radio network temporary identifiers RNTIs, and different DCI formats may also be masked by using a same RNTI. The RNTI may be used for distinguishing between content types, for example, an RA-RNTI (Random Access RNTI) used for a response of a physical random access channel (physical random access channel, PRACH), a TC-RNTI (Temporary C-RNTI) for representing a temporary identifier, a TPC-PUCCH-RNTI (Transmit Power Control-Physical Uplink Control Channel-RNTI) used for parsing uplink power control information of a physical uplink control channel (physical uplink control channel, PUCCH), and a TPC-PUSCH-RNTI (Transmit Power Control-Physical Uplink Shared Channel-RNTI) used for parsing uplink power control information of a physical uplink shared channel (physical uplink shared channel, PUSCH). The RNTI may be further used for distinguishing between terminal devices. For example, each terminal device has a featured C-RNTI (cell RNTI) of the terminal device.

Different types of search space sets correspond to different DCI formats, and CRCs of DCI in different DCI formats are scrambled by using different RNTIs. Therefore, one terminal device may monitor PDCCH candidates in one or more of the following search space sets.

Type0-PDCCH CSS set: configured on a PCell of an MCG, and configured by pdcch-ConfigSIB 1 in a master information block (master information block, MIB), or configured by pdcch-ConfigSIB 1 in PDCCH-ConfigCommon, or configured by a search space 0 (searchSpaceZero) in PDCCH-Config Common, where a CRC of a DCI format thereof is scrambled by using an SI-RNTI.

TypeOA-PDCCH CSS set: configured on a PCell of an MCG and configured by pdcch-searchSpaceOtherSystemInformation in PDCCH-ConfigCommon, where a CRC of a DCI format thereof is scrambled by using an SI-RNTI.

Typel-PDCCH CSS set: configured on a PCell and configured by ra-SearchSpace in PDCCH-ConfigCommon, where a CRC of a DCI format thereof is scrambled by using an RA-RNTI or a TC-RNTI.

Type2-PDCCH CSS set: configured on a PCell of an MCG and configured by a paging search space (paging Search Space) in PDCCH-ConfigCommon, where a CRC of a DCI format thereof is scrambled by using a P-RNTI.

Type3-PDCCH CSS set: configured by a search space whose search space type is common search space (searchSpaceType=common) in PDCCH-Config, where a CRC of a DCI format thereof is scrambled by using an INT-RNTI (interrupted transmission indication RNTI), an SFI-RNTI (slot format indication RNTI), a TPC-PUSCH-RNTI, a TPC-PUCCH-RNTI, or a TPC-SRS-RNTI (Transmit Power Control-Sounding Reference Symbols-RNTI), and a CRC of one or more DCI formats thereof may be scrambled by using a C-RNTI, a subcarrier spacing, or CS-RNTI(s) only in a PCell.

The Type0-PDCCH CSS set, the TypeOA-PDCCH CSS set, the Typel-PDCCH CSS set, the Type2-PDCCH CSS set, and the Type3-PDCCH CSS set represent 5 types of a common search space set (CSS set).

Specific search space set (USS set): configured by a search space whose search space type is UE-specific search space in PDCCH-Config (searchSpaceType=UE-Specific), a CRC of one or more DCI formats is scrambled by using a C-RNTI, an MCS-C-RNTI (modulation and coding scheme-cell-RNTI) used for indicating a modulation and coding scheme (modulation and coding scheme, MCS) table used by a PUSCH/PDSCH, an SP-CSI-RNTI (semi-persistent-channel state information-RNTI) indicating semi-persistent channel state information (Channel State Information, CSI) reported by a PUSCH, and CS-RNTI(s) (configured scheduling RNTI) used for semi-persistent scheduling (Semi-Persistent Scheduling, SPS).

Table 1 shows some possible association relationships between DCI formats and RNTIs. The table may be extended based on development of a protocol. This is not limited in the embodiments of this application.

**Table 1 Association relationship between DCI format and RNTI**

| DCI format | Purpose | Associated RNTI |
|---|---|---|
| 0_0 | PUSCH scheduling in 1 cell | C-RNTI/CS-RNTI/MCS-C-RNTI |
| 0_1 | PUSCH scheduling in 1 cell | C-RNTI/CS-RNTI /SP-CSI-RNTI/MCS-C-RNTI |
| 0_2 | PUSCH scheduling in 1 cell | C-RNTI/CS-RNTI/SP-CSI-RNTI/ MCS-C-RNTI |
| 1_0 | PDSCH scheduling in 1 cell | SI-RNTI/P-RNTI/RA-RNTI/TC-RNTI /C-RNTI/CS-RNTI/MCS-C-RNTI |
| 1_1 | PDSCH scheduling in 1 cell | C-RNTI/CS-RNTI/MCS-C-RNTI |
| 1_2 | PDSCH scheduling in 1 cell | C-RNTI/CS-RNTI/MCS-C-RNTI |
| 2_0 | Indicating a slot format of a group of UEs | SFI-RNTI |
| 2_1 | Notifying a group of UEs that no signal is transmitted on indicated PRBs and OFDM symbols | INT-RNTI |
| 2_2 | Transmitting power control commands for PUCCH and PUSCH | TPC-PUSCH-RNTI/TPC-PUCCH-RNTI |
| 2_3 | Transmitting a set of power control commands for one or more UEs to transmit SRSs | TPC-SRS-RNTI |

4. PDCCH reception

During PDCCH monitoring, the following two factors may greatly affect implementation complexity. One factor is a quantity of monitored PDCCH candidates, which is sometimes referred to as a quantity of times of blind detection (blind detection, BD); and the other factor is a quantity of non-overlapping CCEs, which is sometimes referred to as a quantity of CCEs. A larger quantity of monitored PDCCH candidates indicates higher decoding complexity of the terminal device, and a larger quantity of non-overlapping CCEs indicates higher channel estimation complexity of the terminal device. CCEs that meet conditions of different CORESET sequence numbers and different start symbols of corresponding PDCCH candidates are considered to be non-overlapping.
PDCCH detection has the following 4 problems:

1) Limitation: To reduce complexity of the terminal device, upper limits of the quantity of monitored PDCCH candidates and the quantity of non-overlapping CCEs are separately limited in NR. In R15, limitation is performed per slot (per slot), and in R16, limitation is performed per time span (per span). The span is several consecutive OFDM symbols in one slot.

2) PDCCH candidate monitoring capability and allocation of the terminal device: Different terminal devices have different PDCCH candidate monitoring capabilities, and a quantity of monitored PDCCH candidates and a quantity of non-overlapping CCEs that can be simultaneously supported by the terminal device are limited and may be converted into a quantity M of supported cells. When N cells are configured for the terminal device, but M<N, capabilities of the M cells that can be supported by the terminal device need to be allocated to the N cells.

3) Overbooking and processing: PDCCH configuration of the network side device may cause the quantity of PDCCH candidates and the quantity of non-overlapping CCEs monitored in some slots/spans to be greater than the PDCCH candidate monitoring capability of the terminal device. In this case, the terminal device needs to select some PDCCH candidates in the slots/spans for monitoring according to a protocol specification, to ensure that the quantity of PDCCH candidates and the quantity of non-overlapping CCEs monitored are less than or equal to the PDCCH candidate monitoring capability of the terminal device.

4) Scenario: Currently, the 3rd Generation Partnership Project (3rd Generation Partnership Project, 3GPP) defines the following working scenarios:

R15 non-multi-TRP single cell/CA;
R15 multi-TRP single cell/CA;

R15 non-multi-TRP single cell/CA and multi-TRP single cell/CA;

R15 non-multi-TRP NR-DC;

R16 non-multi-TRP single cell/CA; and

R15+R16 non-multi-TRP CA.

A problem of allocating the PDCCH candidate monitoring capability of the terminal device needs to be discussed in different working scenarios, and the working scenario is not limited in the embodiments of this application.

If an SCG is configured for the terminal device, the foregoing method may be applied to the MCG and the SCG, but PDCCH detection on the Type0/0A/2-PDCCH CSS sets is not performed in the SCG (that is, SIBs and paging are not received in the SCG). When the method is applied to the MCG, the "secondary cell SCell" and the "serving cell" are used for representing a secondary cell and a serving cell in the MCG, and the "primary cell PCell" is used for representing a PCell in the MCG. When the method is applied to the SCG, the "secondary cell SCell" and the "serving cell" are used for representing a secondary cell and a serving cell in the SCG, and the "primary cell PCell" is used for representing a PSCell in the SCG.

5. Difference Between R15 and R16

The difference between R15 and R16 is as follows: In R15, the quantity of monitored PDCCH candidates and the quantity of non-overlapping CCEs are limited in each slot; but in R16, the quantity of monitored PDCCH candidates and the quantity of non-overlapping CCEs are limited in each span.

The network side device configures a parameter PDCCH monitoring capability config (PDCCH Monitoring Capability Config) for each serving cell of the terminal device. The parameter may have two values: An R15 PDCCH monitoring capability (R15 PDCCH monitoring capability) and an R16 PDCCH monitoring capability (R16 PDCCH monitoring capability).

If a value of the PDCCH Monitoring Capability Config of a serving cell is R15 PDCCH monitoring capability, or no PDCCH Monitoring Capability Config is configured, maximum quantities of PDCCH candidates and non-overlapping CCEs monitored by the terminal device in each slot in the serving cell are shown in Table 2-1 and Table 2-3.

If a value of the PDCCH Monitoring Capability Config of a serving cell is R16 PDCCH monitoring capability, maximum quantities of PDCCH candidates and non-overlapping CCEs monitored by the terminal device in each span in the serving cell are shown in Table 2-2 and Table 2-4. Values such as M01 and C01 may be determined based on subsequent protocol development.

**Table 2-1 Maximum quantity of PDCCH candidates monitored in a serving cell in each slot**

| $\mu$ | $M_{PDCCH}^{\max,slot,\mu}$ |
|---|---|
| 0 | 44 |
| 1 | 36 |
| 2 | 22 |
| 3 | 20 |

**Table 2-2 Maximum quantity of non-overlapping CCEs monitored in a serving cell in each slot**

| | $M_{PDCCH}^{\max,(X,Y),\mu}$ | | |
|---|---|---|---|
| $\mu$ | (2, 2) | (4, 3) | (7, 3) |
| 0 | M01 | M02 | M03 |
| 1 | M11 | M12 | M13 |

## EP 4 187 827 A1

**Table 2-3 Maximum quantity of PDCCH candidates monitored in a serving cell in each span**

| $\mu$ | $C_{PDCCH}^{\max,slot,\mu}$ |
|---|---|
| 0 | 56 |
| 1 | 56 |
| 2 | 48 |
| 3 | 32 |

**Table 2-4 Maximum quantity of non-overlapping CCEs monitored in a serving cell in each span**

| | $C_{PDCCH}^{\max,(X,Y),\mu}$ | | |
|---|---|---|---|
| $\mu$ | (2, 2) | (4, 3) | (7, 3) |
| 0 | C01 | C02 | 56 |
| 1 | C11 | C12 | 56 |

Based on the foregoing descriptions of the related technical background, an embodiment of this application further provides a schematic architectural diagram of a possible mobile communication system. As shown in FIG. 1(b), the mobile communication system includes a core network device 110, a radio access network device 120, and at least one terminal device (for example, a terminal device 130 and a terminal device 140 in FIG. 1(b)). The terminal device is connected to the radio access network device in a wireless manner, and the radio access network device is connected to the core network device in a wireless or wired manner. The core network device and the radio access network device may be different independent physical devices, or functions of the core network device and logical functions of the radio access network device may be integrated into a same physical device, or some functions of the core network device and some functions of the radio access network device may be integrated into a physical device. The core network device and the radio access network device may be collectively referred to as a network side device. The terminal device may be located at a fixed position, or may be mobile. FIG. 1(b) is merely a schematic diagram. The communication system may further include another network device, for example, may further include a wireless relay device and a wireless backhaul device. Quantities of core network devices, radio access network devices, and terminal devices included in the mobile communication system are not limited in the embodiments of this application.

The radio access network device is an access device through which the terminal device accesses the mobile communication system in a wireless manner, and may be a base station (Base Station) such as a NodeB, an evolved NodeB eNodeB, a base station in an NR mobile communication system, a base station in a future mobile communication system, or an access node in a wireless fidelity (Wi-FI) system. A specific technology and a specific device form that are used by the radio access network device are not limited in the embodiments of this application. The terminal device may also be referred to as a terminal, user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. A specific technology and a specific device form that are used by the terminal device are not limited in the embodiments of this application.

The radio access network device and the terminal device may be deployed on land, including indoors or outdoors, or handheld or vehicle-mounted; may be deployed on water; or may be deployed on an airplane, a balloon, and a satellite in the air. Application scenarios of the radio access network device and the terminal device are not limited in the embodiments of this application.

The embodiments of this application may be applicable to downlink signal transmission, or may be applicable to uplink signal transmission, or may be applicable to signal transmission in a device-to-device communication technology (sidelink). For downlink signal transmission, a sending device is a radio access network device, and a corresponding receiving device is a terminal device. For uplink signal transmission, a sending device is a terminal device, and a corresponding receiving device is a radio access network device. For D2D signal transmission, a sending device is a terminal device, and a corresponding receiving device is also a terminal device. A signal transmission direction is not limited in the embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. A spectrum below 6 GHz, a spectrum above 6 GHz, or both of a spectrum below 6 GHz and a spectrum above 6 GHz may be used for communication between the radio access network device and the terminal device and communication between terminal devices. Spectrum resources used by the radio access network device and the terminal device are not limited in the embodiments of this application.

The following describes a resource scheduling method provided in the embodiments of this application with reference to the accompanying drawings. It should be noted that, in the descriptions, names of information or data exchanged between the terminal device and the network device are used as examples, and do not constitute a limitation on the embodiments of this application.

Referring to FIG. 2, FIG. 2 is a schematic flowchart of a resource scheduling method according to an embodiment of this application. As shown in FIG. 2, the resource scheduling method includes but is not limited to the following steps.

201. A network side device sends first configuration information to a terminal device.

202. The terminal device receives the first configuration information sent by the network side device.

The first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell. For example, the positions of resources for performing data communication may be positions of PDSCH resources or PUSCH resources. In addition, the first cell and the second cell belong to a same cell group, and the first cell and the second cell may be secondary cells or primary cells. This is not limited in the embodiments of this application, and includes but is not limited to the following several possible scheduling scenarios.

Scenario 1: The first cell is a secondary cell in a cell group, and the second cell is a primary cell in the cell group. The cell group may include an MCG and an SCG. When the cell group is an MCG, the primary cell is a PCell in the MCG, and the secondary cell is any SCell in the MCG. In this case, the first configuration information is used for configuring positions of resources of PDCCH candidates of an SCell, DCI of a PCell is carried on at least one PDCCH candidate of the configured PDCCH candidates of the SCell, and the DCI of the PCell is used for scheduling positions of resources for the terminal device to perform data communication in the PCell. Therefore, resources in a PCell may be scheduled by using an SCell.

When the cell group is an SCG, the primary cell is a PSCell in the SCG, and the secondary cell is any SCell in the SCG. In this case, the first configuration information is used for configuring positions of resources of PDCCH candidates of an SCell, DCI of a PSCell is carried on at least one PDCCH candidate of the configured PDCCH candidates of the SCell, and the DCI of the PSCell is used for scheduling positions of resources for the terminal device to perform data communication in the PSCell. Therefore, resources in a PSCell may be scheduled by using an SCell. Scenario 2: The first cell is a secondary cell in a cell group, and the second cell is another secondary cell in the cell group. The cell group may include an MCG and an SCG, and a secondary cell represents any SCell in the MCG or the SCG. For example, the first configuration information is used for configuring positions of resources of PDCCH candidates of an SCell$_1$, DCI of an SCell2 is carried on at least one PDCCH candidate of the configured PDCCH candidates of the SCell$_1$, and the DCI of the SCell$_2$ is used for scheduling positions of resources for the terminal device to perform data communication in the SCell$_2$. Therefore, resources in an SCell may be scheduled by using an SCell. Scenario 3: The first cell is a primary cell in a cell group, and the second cell is a secondary cell in the cell group. The cell group may include an MCG and an SCG. When the cell group is an MCG, the primary cell is a PCell in the MCG, and the secondary cell is any SCell in the MCG. In this case, the first configuration information is used for configuring positions of resources of PDCCH candidates of an SCell, DCI of an SCell is carried on at least one PDCCH candidate of the configured PDCCH candidates of the PCell, and the DCI of the SCell is used for scheduling positions of resources for the terminal device to perform data communication in the SCell.

When the cell group is an SCG, the primary cell is a PSCell in the SCG, and the secondary cell is any SCell in the SCG. In this case, the first configuration information is used for configuring positions of resources of PDCCH candidates of a PSCell, DCI of an SCell is carried on at least one PDCCH candidate of the configured PDCCH candidates of the PSCell, and the DCI of the SCell is used for scheduling positions of resources for the terminal device to perform data communication in the SCell.

Optionally, the network side device further sends second configuration information to the terminal device. Correspondingly, the terminal device further receives the second configuration information sent by the network side device. The second configuration information is used for configuring positions of resources of PDCCH candidates of the second cell, and the downlink control information DCI of the second cell is carried on at least one PDCCH candidate of the configured PDCCH candidates of the second cell.

When the second cell is the PCell in the scenario 1 of the foregoing scheduling scenarios, the DCI of the PCell is carried on at least one PDCCH candidate of configured PDCCH candidates of an SCell, and/or carried on at least one PDCCH candidate of configured PDCCH candidates of the PCell. Therefore, resources in a PCell may be scheduled by using the PCell and an SCell. When the second cell is the PSCell in the scenario 1 of the foregoing scheduling scenarios, the DCI of the PSCell is carried on at least one PDCCH candidate of configured PDCCH candidates of an SCell, and/or carried on at least one PDCCH candidate of configured PDCCH candidates of the PSCell. Therefore, resources in a PSCell may be scheduled by using the PSCell and an SCell. When the second cell is the SCell in the scenario 2 of the foregoing scheduling scenarios, the DCI of the SCell is carried on at least one PDCCH candidate of configured PDCCH candidates of a PCell, and/or carried on at least one PDCCH candidate of configured PDCCH candidates of the SCell. Therefore, resources in an SCell may be scheduled by using a PCell and the SCell. When the second cell is the SCell in the scenario 3 of the foregoing scheduling scenarios, the DCI of the SCell is carried on at least one PDCCH candidate of configured PDCCH candidates of a PSCell, and/or carried on at least one PDCCH candidate of configured PDCCH candidates of the SCell. Therefore, resources in an SCell may be scheduled by using a PSCell and the SCell. The primary cell or another secondary cell is scheduled by using the secondary cell and the primary cell, thereby balancing scheduling load of the network side device.

Optionally, based on the foregoing scheduling scenarios, the first configuration information may be further used for configuring a search space set SS set; and/or the first configuration information may be further used for configuring a radio network temporary identifier RNTI, which include but are not limited to the following several scheduling solutions.

Solution one: The first configuration information may be further used for configuring a first SS set on the first cell, and at least one PDCCH candidate in the first SS set is used for carrying the DCI of the second cell; when the cell group is a master cell group MCG, the first cell is at least one secondary cell SCell in the cell group, and the second cell is a primary cell PCell in the cell group, the first SS set does not belong to a Type0-PDCCH CSS set, a TypeOA-PDCCH CSS set, a Typel-PDCCH CSS set, and a Type2-PDCCH CSS set; and/or when the cell group is a secondary cell group SCG, the first cell is at least one secondary cell SCell in the cell group, and the second cell is a primary secondary cell PSCell in the cell group, the first SS set does not belong to the Typel-PDCCH CSS set and the Type2-PDCCH CSS set. The first SS set may be a USS.

The first configuration information is further used for configuring a first RNTI, where the first RNTI is used for scrambling a cyclic redundancy check CRC of the DCI of the second cell carried on the at least one PDCCH candidate of the first cell; when the cell group is a master cell group MCG, the first cell is at least one secondary cell SCell in the cell group, and the second cell is a primary cell PCell in the cell group, the first RNTI does not belong to an SI-RNTI, a P-RNTI, an RA-RNTI, and a TC-RNTI; and/or when the cell group is a secondary cell group SCG, the first cell is at least one secondary cell SCell in the cell group, and the second cell is a primary secondary cell PSCell in the cell group, the first RNTI does not belong to the RA-RNTI and the TC-RNTI. For example, the first RNTI may be one of a C-RNTI, an MCS-C-RNTI, and a CS-RNTI.

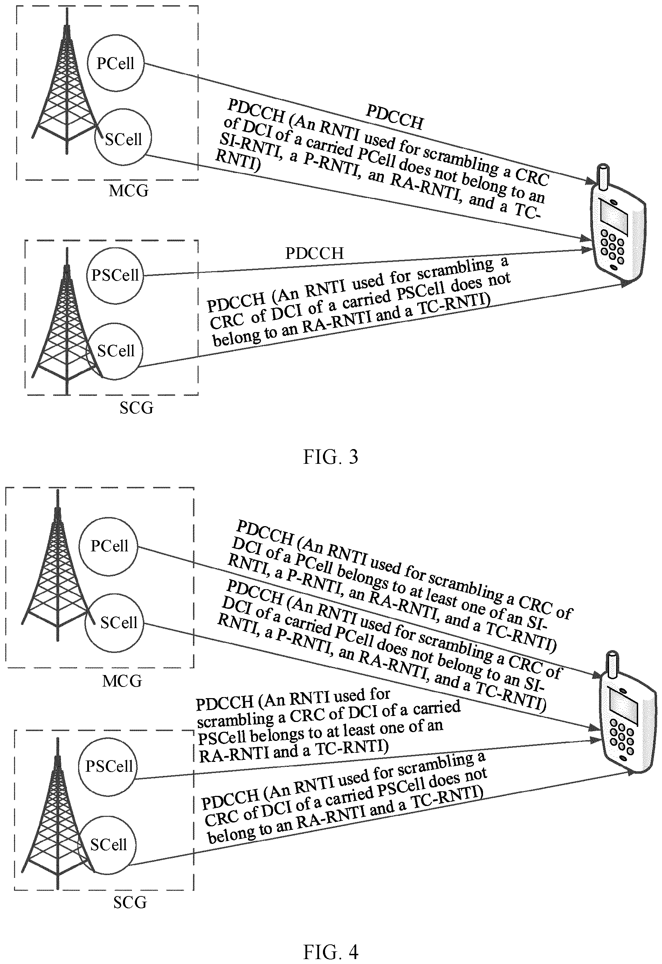

For example, referring to FIG. 3, FIG. 3 is a schematic diagram of a scenario of a scheduling solution according to an embodiment of this application. As shown in FIG. 3, one master cell group and one secondary cell group are used as an example for description. The MCG includes one PCell and one SCell, and the SCG includes one PSCell and one SCell. When the cell group is an MCG, an RNTI used for scrambling a CRC of DCI of the PCell carried on at least one PDCCH candidate of the SCell does not belong to an SI-RNTI, a P-RNTI, an RA-RNTI, and a TC-RNTI. That is, a PDCCH candidate that scrambles the CRC of the DCI of the carried PCell by using an SI-RNTI, a P-RNTI, an RA-RNTI, or a TC-RNTI cannot be configured on the SCell; and a PDCCH candidate that scrambles the CRC of the DCI of the carried PCell by using an RNTI other than the SI-RNTI, the P-RNTI, the RA-RNTI, or the TC-RNTI is configured on the SCell. When the cell group is an SCG, an RNTI used for scrambling a CRC of DCI of the PSCell carried on at least one PDCCH candidate of the SCell does not belong to an RA-RNTI and a TC-RNTI. That is, a PDCCH candidate that scrambles the CRC of the DCI of the carried PSCell by using an RA-RNTI or a TC-RNTI cannot be configured on the SCell; and a PDCCH candidate that scrambles the CRC of the DCI of the carried PCell by using an RNTI other than the RA-RNTI or the TC-RNTI is configured on the SCell.

A part of DCI related to a non-broadcast channel of the PCell or the PSCell, for example, DCI related to single-point transmission, is carried on a PDCCH candidate in the SCell. In this way, scheduling flexibility is improved and scheduling resources on the PCell and the PSCell are saved.

Solution two: The first configuration information may be further used for configuring a first SS set on the first cell, and at least one PDCCH candidate in the first SS set is used for carrying the DCI of the second cell; when the cell group is a master cell group MCG, the first cell is at least one secondary cell SCell in the cell group, and the second cell is a primary cell PCell in the cell group, the first SS set does not belong to a Type0-PDCCH CSS set, a TypeOA-PDCCH CSS set, a Typel-PDCCH CSS set, and a Type2-PDCCH CSS set; and/or when the cell group is a secondary cell group SCG, the first cell is at least one secondary cell SCell in the cell group, and the second cell is a primary secondary cell PSCell in the cell group, the first SS set does not belong to the Typel-PDCCH CSS set and the Type2-PDCCH CSS set. The first SS set may be a USS.

Optionally, the first configuration information is further used for configuring a first RNTI, where the first RNTI is used for scrambling a cyclic redundancy check CRC of the DCI of the second cell carried on the at least one PDCCH candidate of the first cell; when the cell group is a master cell group MCG, the first cell is at least one secondary cell SCell in the cell group, and the second cell is a primary cell PCell in the cell group, the first RNTI does not belong to an SI-RNTI, a P-RNTI, an RA-RNTI, and a TC-RNTI; and/or when the cell group is a secondary cell group SCG, the first cell is at least one secondary cell SCell in the cell group, and the second cell is a primary secondary cell PSCell in the cell group, the first RNTI does not belong to the RA-RNTI and the TC-RNTI. For example, the first RNTI may be one of a C-RNTI, an MCS-C-RNTI, and a CS-RNTI.

Optionally, the second configuration information may be further used for configuring a second SS set on the second cell, where at least one PDCCH candidate in the second SS set is used for carrying the DCI of the second cell; when the cell group is an MCG, the first cell is at least one SCell in the cell group, and the second cell is a PCell in the cell group, the second SS set belongs to at least one of the Type0-PDCCH CSS set, the TypeOA-PDCCH CSS set, the Typel-PDCCH CSS set, and the Type2-PDCCH CSS set; and/or when the cell group is an SCG, the first cell is at least one SCell in the cell group, and the second cell is a PSCell in the cell group, the second SS set belongs to at least one of the Typel-PDCCH CSS set and the Type2-PDCCH CSS set.

Optionally, the second configuration information is further used for configuring a second RNTI, where the second RNTI is used for scrambling a CRC of the DCI of the second cell carried on the at least one PDCCH candidate of the second cell; when the cell group is an MCG, the first cell is at least one SCell in the cell group, and the second cell is a PCell in the cell group, the second RNTI belongs to at least one of an SI-RNTI, a P-RNTI, an RA-RNTI, and a TC-RNTI; and/or when the cell group is an SCG, the first cell is at least one SCell in the cell group, and the second cell is a PSCell in the cell group, the second RNTI belongs to at least one of the RA-RNTI and the TC-RNTI.

For example, referring to FIG. 4, FIG. 4 is a schematic diagram of a scenario of another scheduling solution according to an embodiment of this application. As shown in FIG. 4, one master cell group and one secondary cell group are used as an example for description. The MCG includes one PCell and one SCell, and the SCG includes one PSCell and one SCell. When the cell group is an MCG, an RNTI used for scrambling a CRC of DCI of the PCell carried on at least one PDCCH candidate of the SCell does not belong to an SI-RNTI, a p-RNTI, an RA-RNTI, and a TC-RNTI, and an RNTI used for scrambling a CRC of DCI of the PCell carried on at least one PDCCH candidate of the PCell belongs to at least one of the SI-RNTI, the P-RNTI, the RA-RNTI, and the TC-RNTI. That is, a PDCCH candidate that scrambles the CRC of the DCI of the carried PCell by using an SI-RNTI, a p-RNTI, an RA-RNTI, or a TC-RNTI cannot be configured on the SCell and can be configured only on the PCell; and a PDCCH candidate that scrambles the CRC of the DCI of the carried PCell by using an RNTI other than the SI-RNTI, the P-RNTI, the RA-RNTI, or the TC-RNTI is configured on the SCell. When the cell group is an SCG, an RNTI used for scrambling a CRC of DCI of the PSCell carried on at least one PDCCH candidate of the SCell does not belong to an RA-RNTI and a TC-RNTI, and an RNTI used for scrambling a CRC of DCI of the PSCell carried on at least one PDCCH candidate of the PSCell belongs to at least one of the RA-RNTI and the TC-RNTI. That is, a PDCCH candidate that scrambles the CRC of the DCI of the carried PSCell by using an RA-RNTI and a TC-RNTI cannot be configured on the SCell and can be configured only on the PSCell; and a PDCCH candidate that scrambles the CRC of the DCI of the carried PSCell by using an RNTI other than the RA-RNTI or the TC-RNTI is configured on the SCell.

DCI related to a broadcast channel of the PCell or the PSCell may be carried on a PDCCH candidate in the PCell or the PSCell, and DCI related to a non-broadcast channel may be carried on a PDCCH candidate in the SCell. In this way, scheduling flexibility is improved and scheduling resources on the PCell and the PSCell are saved, thereby balancing load of the network side device.

Solution Three: The first configuration information may be further used for configuring a first SS set on the first cell, and at least one PDCCH candidate in the first SS set is used for carrying the DCI of the second cell; when the cell group is a master cell group MCG, the first cell is at least one secondary cell SCell in the cell group, and the second cell is a primary cell PCell in the cell group, the first SS set does not belong to a Type0-PDCCH CSS set, a TypeOA-PDCCH CSS set, a Typel-PDCCH CSS set, and a Type2-PDCCH CSS set; and/or when the cell group is a secondary cell group SCG, the first cell is at least one secondary cell SCell in the cell group, and the second cell is a primary secondary cell PSCell in the cell group, the first SS set does not belong to the Typel-PDCCH CSS set and the Type2-PDCCH CSS set. The first SS set may be a USS.

Optionally, the first configuration information is further used for configuring a first RNTI, where the first RNTI is used for scrambling a cyclic redundancy check CRC of the DCI of the second cell carried on the at least one PDCCH candidate of the first cell; when the cell group is a master cell group MCG, the first cell is at least one secondary cell SCell in the cell group, and the second cell is a primary cell PCell in the cell group, the first RNTI does not belong to an SI-RNTI, a P-RNTI, an RA-RNTI, and a TC-RNTI; and/or when the cell group is a secondary cell group SCG, the first cell is at least one secondary cell SCell in the cell group, and the second cell is a primary secondary cell PSCell in the cell group, the first RNTI does not belong to the RA-RNTI and the TC-RNTI. For example, the first RNTI may be one of a C-RNTI, an MCS-C-RNTI, and a CS-RNTI.

When the first cell is a secondary cell in the cell group and the second cell is a primary cell in the cell group, the first configuration information further meets a condition that all PDCCH candidates that are capable of carrying the DCI of the second cell are in the first cell. In addition, the network side device can no longer send the second configuration information to the terminal device.

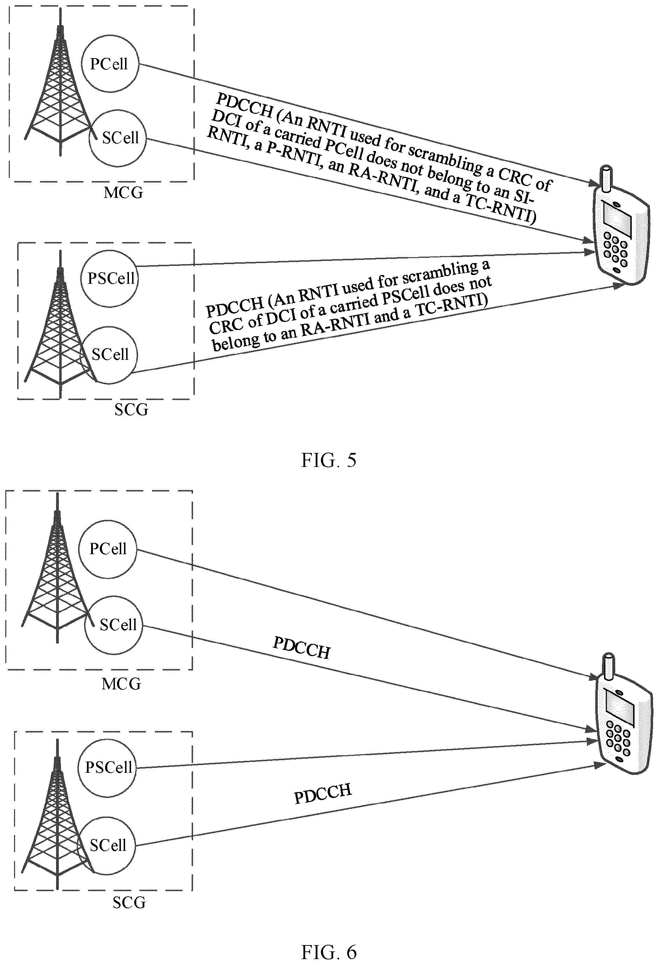

For example, referring to FIG. 5, FIG. 5 is a schematic diagram of a scenario of another scheduling solution according to an embodiment of this application. As shown in FIG. 5, one master cell group and one secondary cell group are used as an example for description. The MCG includes one PCell and one SCell, and the SCG includes one PSCell and one SCell. When the cell group is an MCG, an RNTI used for scrambling a CRC of DCI of the PCell carried on at least one PDCCH candidate of the SCell does not belong to an SI-RNTI, a P-RNTI, an RA-RNTI, and a TC-RNTI. That is, a PDCCH candidate that scrambles the CRC of the DCI of the carried PCell by using an SI-RNTI, a P-RNTI, an RA-RNTI, or a TC-RNTI cannot be configured on the SCell; a PDCCH candidate that scrambles the CRC of the DCI of the carried PCell by using an RNTI other than the SI-RNTI, the P-RNTI, the RA-RNTI, or the TC-RNTI can be configured only on the SCell; and the DCI of the PCell cannot be carried on a PDCCH candidate of the PCell. When the cell group is an SCG, an RNTI used for scrambling a CRC of DCI of the PSCell carried on at least one PDCCH candidate of the SCell does not belong to an RA-RNTI and a TC-RNTI. That is, a PDCCH candidate that scrambles the CRC of the DCI of the carried PSCell by using an RA-RNTI or a TC-RNTI cannot be configured on the SCell; a PDCCH candidate that scrambles the CRC of the DCI of the carried PCell by using an RNTI other than the RA-RNTI and the TC-RNTI can be configured only on the SCell; and the DCI of the PCell cannot be carried on a PDCCH candidate of the PSCell.

DCI related to a non-broadcast channel of the PCell or the PSCell may be carried on a PDCCH candidate in the SCell. In this way, scheduling flexibility is improved and scheduling resources on the PCell and the PSCell are saved. In addition, the terminal device does not need to receive a PDCCH on the PCell and the PSCell, thereby reducing power consumption of the terminal device.

Solution four: The first configuration information may be further used for configuring a first SS set on the first cell, where at least one PDCCH candidate in the first SS set is used for carrying the DCI of the second cell; when the cell group is an MCG, the first cell is at least one SCell in the cell group, and the second cell is a PCell in the cell group, the first SS set belongs to at least one of a Type0-PDCCH CSS set, a TypeOA-PDCCH CSS set, a Typel-PDCCH CSS set, and a Type2-PDCCH CSS set; and/or when the cell group is an SCG, the first cell is at least one SCell in the cell group, and the second cell is a PSCell in the cell group, the first SS set belongs to at least one of the Typel-PDCCH CSS set and the Type2-PDCCH CSS set.

Optionally, the first configuration information is further used for configuring a first RNTI, where the first RNTI is used for scrambling a cyclic redundancy check CRC of the DCI of the second cell carried on the at least one PDCCH candidate of the first cell; when the cell group is an MCG, the first cell is at least one SCell in the cell group, and the second cell is a PCell in the cell group, the first RNTI belongs to at least one of an SI-RNTI, a P-RNTI, an RA-RNTI, and a TC-RNTI; and/or when the cell group is an SCG, the first cell is at least one SCell in the cell group, and the second cell is a PSCell in the cell group, the first RNTI belongs to at least one of the RA-RNTI and the TC-RNTI. For example, the first RNTI may also be one of a C-RNTI, an MCS-C-RNTI, and a CS-RNTI.

When the first cell is a secondary cell in the cell group, and the second cell is a primary cell in the cell group, optionally, the first configuration information further meets the following principle: All PDCCH candidates that can carry the DCI of the second cell are in the first cell, and the network side device can no longer send the second configuration information to the terminal device.

For example, referring to FIG. 6, FIG. 6 is a schematic diagram of a scenario of a scheduling solution according to an embodiment of this application. As shown in FIG. 6, one master cell group and one secondary cell group are used as an example for description. The MCG includes one PCell and one SCell, and the SCG includes one PSCell and one SCell. When the cell group is an MCG, an RNTI used for scrambling a CRC of DCI of the PCell carried on at least one PDCCH candidate of the SCell belongs to at least one of an SI-RNTI, a P-RNTI, an RA-RNTI, and a TC-RNTI. That is, a PDCCH candidate that scrambles the CRC of the DCI of the carried PCell by using an SI-RNTI, a P-RNTI, an RA-RNTI, or a TC-RNTI can be configured only on the SCell; a PDCCH candidate that scrambles the CRC of the DCI of the carried PCell by using an RNTI other than the SI-RNTI, the P-RNTI, the RA-RNTI, or the TC-RNTI also can be configured only on the SCell; and the DCI of the PCell cannot be carried on a PDCCH candidate of the PCell. When the cell group is an SCG, an RNTI used for scrambling a CRC of DCI of the PSCell carried on at least one PDCCH candidate of the SCell belongs to at least one of an RA-RNTI and a TC-RNTI. That is, a PDCCH candidate that scrambles the CRC of the DCI of the carried PSCell by using an RA-RNTI or a TC-RNTI can be configured only on the SCell; a PDCCH candidate that scrambles the CRC of the DCI of the carried PCell by using an RNTI other than the RA-RNTI and the TC-RNTI also can be configured only on the SCell; and the DCI of the PCell cannot be carried on a PDCCH candidate of the PSCell.

All DCI is carried on PDCCH candidates of the SCell. In this way, scheduling flexibility is improved and scheduling resources on the PCell and the PSCell are saved. In addition, the terminal device does not need to receive a PDCCH on the PCell and the PSCell, thereby reducing power consumption of the terminal device.

Based on Solution three or Solution four in the foregoing scheduling solutions, when the first configuration information is used for configuring the positions of resources of the downlink control channel PDCCH candidates of the first cell, the following several rules are further met.

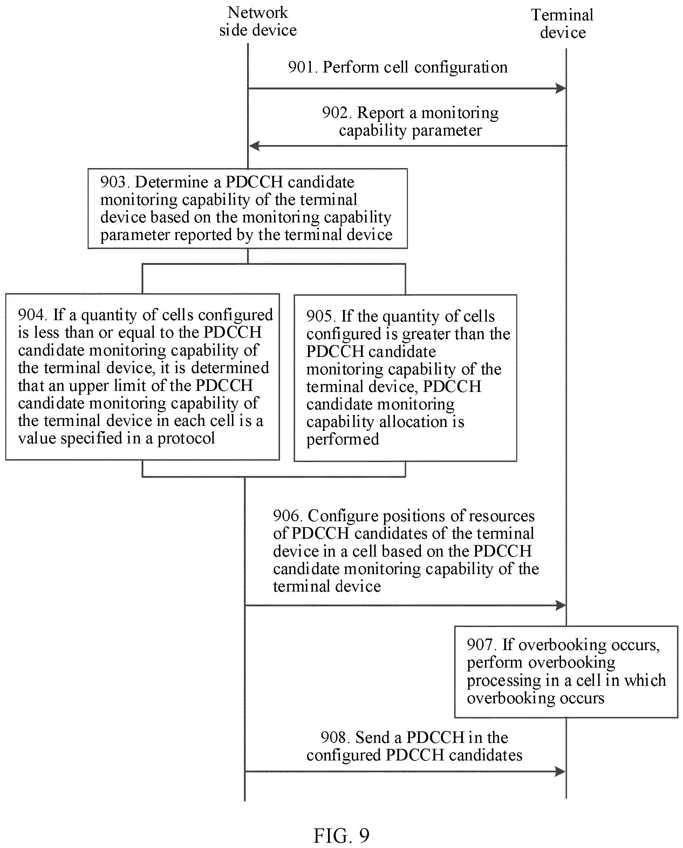

In a possible implementation, a quantity of PDCCH candidates that are configured in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device. The any unit time in a R15-related working scenario may be a slot, and the any unit time in a R16-related working scenario may be a span. This is not limited in the embodiments of this application. The PDCCH candidate monitoring capability of the terminal device may be determined according to related descriptions of steps 902 to 905 in the resource scheduling method shown in FIG. 9, and includes an upper limit

$$\min\left(M_{PDCCH}^{max,slot,\mu}, M_{PDCCH}^{total,slot,\mu}\right)$$

of the quantity of monitored PDCCH candidates and an upper limit

$$\min\left(C_{PDCCH}^{max,slot,\mu}, C_{PDCCH}^{total,slot,\mu}\right)$$

of the quantity of non-overlapping control channel elements.

For example, when an SCell schedules a PCell, that is, only when DCI of the PCell is sent in a PDCCH candidate of the SCell, to schedule a PDCCH candidate in the PCell, it is ensured that PDCCH candidates configured by the network side device for the terminal device do not encounter overbooking. That is, the quantity of PDCCH candidates that are configured by the network side device on the SCell and that carry the DCI related to the PCell is less than or equal to $\min\left(M_{PDCCH}^{max,slot,\mu}, M_{PDCCH}^{total,slot,\mu}\right)$, and the quantity of non-overlapping CCEs is less than or equal to

$\min\left(C_{PDCCH}^{max,slot,\mu}, C_{PDCCH}^{total,slot,\mu}\right)$. Based on this possible implementation, working complexity of the terminal device in determining a PDCCH candidate that needs to be monitored is reduced.

In an implementation, a quantity of PDCCH candidates that are configured in any unit time of the first cell and that carry the DCI of the second cell is allowed to be greater than the PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device. In this case, overbooking may occur. Based on this possible implementation, PDCCH configuration flexibility is improved.

Optionally, the terminal device determines, based on a scheduling solution, whether overbooking occurs. The scheduling solution may be specified in a protocol to be only one of the foregoing scheduling solutions, or the scheduling solution may be specified in the protocol to be several of the foregoing scheduling solutions. The terminal device determines a specific scheduling solution based on a PDCCH candidate configured by the network side device. For example, when the configuration solution described in Solution three is used, overbooking may occur, that is, the quantity of PDCCH candidates related to the PCell configured on the SCell is allowed to be greater than

$$\min\left(M_{PDCCH}^{max,slot,\mu}, M_{PDCCH}^{total,slot,\mu}\right)$$

, and the quantity of non-overlapping CCEs is allowed to be greater than

$\min\left(C_{PDCCH}^{max,slot,\mu}, C_{PDCCH}^{total,slot,\mu}\right)$. For another example, when the scheduling solution described in Solution four is used, overbooking does not occur. That is, the quantity of PDCCH candidates related to the PCell configured on the SCell is less than $\min\left(M_{PDCCH}^{max,slot,\mu}, M_{PDCCH}^{total,slot,\mu}\right)$, and the quantity of non-overlapping CCEs is less than

$\min\left(C_{PDCCH}^{max,slot,\mu}, C_{PDCCH}^{total,slot,\mu}\right)$. Whether overbooking occurs is determined by using a scheduling solution, thereby reducing complexity of the terminal device.

In a possible implementation, it may be specified in a protocol that overbooking may occur on a USS of an SCell in the following several scenarios:

a) The SCell is not configured with PDCCHMonitoringCapabilityConfig, and overbooking occurs on a slot.
b) PDCCHMonitoringCapabilityConfig being equal to R15 PDCCH monitoring capability is configured for all cells, and overbooking occurs on a slot.
c) PDCCHMonitoringCapabilityConfig being equal to R16 PDCCH monitoring capability is configured on the SCell, and overbooking occurs on a span.

d) On the USS of the SCell, CORESETPoolIndex is not configured for the first group of CORESETs, or CORESETPoolIndex is set to 0 for the first group of CORESETs and CORSETPoolIndex is set to 1 for the second group of CORESETs.

e) If $\min\left(\gamma \cdot M_{PDCCH}^{max,slot,\mu}, M_{PDCCH}^{total,slot,\mu}\right) > \min\left(M_{PDCCH}^{max,slot,\mu}, M_{PDCCH}^{total,slot,\mu}\right)$, or

$\min\left(\gamma \cdot C_{PDCCH}^{max,slot,\mu}, C_{PDCCH}^{total,slot,\mu}\right) > \min\left(C_{PDCCH}^{max,slot,\mu}, C_{PDCCH}^{total,slot,\mu}\right)$, overbooking occurs only on USSs corresponding to the first group of CORESETs.

Optionally, after overbooking occurs, the terminal device further performs the following step: first subtracts a quantity of PDCCH candidates associated with a CSS used for monitoring/a quantity of non-overlapping CCEs from the upper limit of the quantity of PDCCH candidates monitored in 1 slot/span/the upper limit of the quantity of non-overlapping CCEs in 1 slot respectively, to obtain the quantity $M_{PDCCH}^{uss} = \min\left(M_{PDCCH}^{max,slot,\mu}, M_{PDCCH}^{total,slot,\mu}\right) - M_{PDCCH}^{css}$ of PDCCH candidates and the total quantity $C_{PDCCH}^{uss} = \min\left(C_{PDCCH}^{max,slot,\mu}, C_{PDCCH}^{total,slot,\mu}\right) - C_{PDCCH}^{css}$ of remaining non-overlapping CCEs respectively.

For the USSs, starting from a highest priority, a quantity of PDCCH candidates/a quantity of non-overlapping CCEs associated with each search space are subtracted from $M_{PDCCH}^{USS}$ and $C_{PDCCH}^{USS}$ respectively according to a priority order of the search spaces. For a USS index value, if the quantity of PDCCH candidates/the total quantity of remaining non-overlapping CCEs after subtraction are still greater than or equal to 0, the terminal device needs to monitor a PDCCH candidate corresponding to the USS index value. For a USS index value, if at least one of the quantity of PDCCH candidates/the total quantity of remaining non-overlapping CCEs after subtraction is less than 0, the terminal device does not need to monitor a PDCCH candidate corresponding to the USS index value and a PDCCH candidate corresponding to a search space greater than the USS index value.

Based on Solution one or Solution two in the foregoing scheduling solutions, when the first configuration information is used for configuring the positions of resources of the downlink control channel PDCCH candidates of the first cell, the following several rules are further met.

In an implementation, a quantity of PDCCH candidates that are configured in any unit time of the first cell and that carry the DCI of the second cell is allowed to be greater than a PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device; and/or a quantity of PDCCH candidates that are configured in any unit time of the second cell and that carry the DCI of the second cell is allowed to be greater than the PDCCH candidate monitoring capability of the terminal device, and/or a quantity of non-overlapping control channel elements related to the PDCCH candidates that are configured in any unit time of the second cell and that carry the DCI of the second cell is allowed to be greater than the PDCCH candidate monitoring capability of the terminal device. Based on this possible implementation, PDCCH configuration flexibility is improved.

In an implementation, a sum of a quantity of PDCCH candidates that are configured in any unit time of the first cell and that carry the DCI of the second cell and a quantity of PDCCH candidates that are configured in any unit time of the second cell and that carry the DCI of the second cell is allowed to be greater than a PDCCH candidate monitoring capability of the terminal device; and/or a sum of a quantity of non-overlapping control channel elements related to the PDCCH candidates that are configured in any unit time of the first cell and that carry the DCI of the second cell and a quantity of non-overlapping control channel elements related to the PDCCH candidates that are configured in any unit time of the second cell and that carry the DCI of the second cell is allowed to be greater than the PDCCH candidate monitoring capability of the terminal device. Based on this possible implementation, PDCCH configuration flexibility is improved.

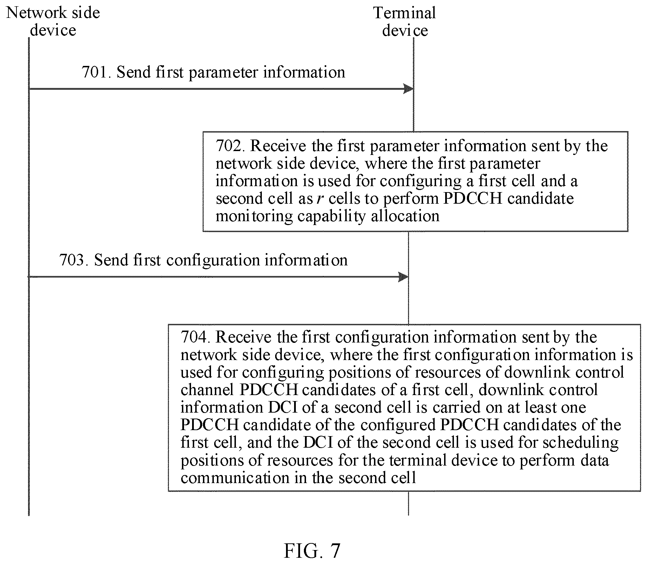

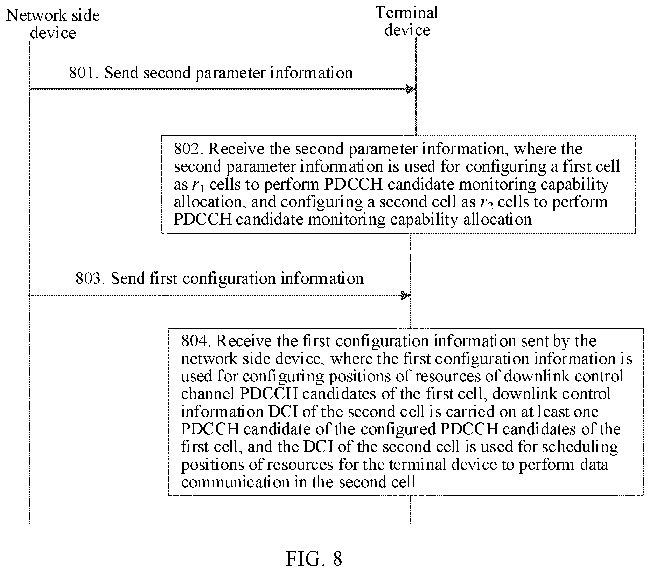

The any unit time in a R15-related working scenario may be a slot, and the any unit time in a R16-related working scenario may be a span. This is not limited in the embodiments of this application. The PDCCH candidate monitoring capability of the terminal device may be determined based on related descriptions of steps 902 to 905 in the resource scheduling method shown in FIG. 9, or related descriptions of step 701 in the resource scheduling method shown in FIG. 7, or related descriptions of step 801 in the resource scheduling method shown in FIG. 8. Details are not described herein again. The PDCCH candidate monitoring capability of the terminal device includes an upper limit

$\min\left(M_{PDCCH}^{max,slot,\mu}, M_{PDCCH}^{total,slot,\mu}\right)$ of a quantity of monitored PDCCH candidates and an upper limit

$$\min\left(C_{PDCCH}^{max,slot,\mu}, C_{PDCCH}^{total,slot,\mu}\right)$$ of a quantity of non-overlapping control channel elements.

Optionally, based on any one of Solution one to Solution four in the foregoing scheduling solutions, the terminal device further performs the following steps.

The terminal device receives first indication information sent by the network side device, where if the first indication information indicates a first value, the first indication information indicates that a quantity of PDCCH candidates that are configured by the terminal device in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device; and if the first indication information indicates a second value, the first indication information indicates that the quantity of PDCCH candidates that are configured by the terminal device in any unit time of the first cell and that carry the DCI of the second cell is allowed to be greater than the PDCCH candidate monitoring capability of the terminal device, and/or the quantity of non-overlapping control channel elements related to the PDCCH candidates that are configured in any unit time of the first cell and that carry the DCI of the second cell is allowed to be greater than the PDCCH candidate monitoring capability of the terminal device. The any unit time in a R15-related working scenario may be a slot, and the any unit time in a R16-related working scenario may be a span. This is not limited in the embodiments of this application. Specific values of the first value and the second value are not limited. For example, the first value is 0, and the second value is 1. The PDCCH candidate monitoring capability of the terminal device may be determined based on related descriptions of steps 902 to 905 in the resource scheduling method shown in FIG. 9, or related descriptions of step 701 in the resource scheduling method shown in FIG. 7, or related descriptions of step 801 in the resource scheduling method shown in FIG. 8. Details are not described herein again. The PDCCH candidate monitoring capability of the terminal device includes an upper limit $\min\left(M_{PDCCH}^{max,slot,\mu}, M_{PDCCH}^{total,slot,\mu}\right)$ of a quantity of monitored PDCCH candidates and an upper limit $\min\left(C_{PDCCH}^{max,slot,\mu}, C_{PDCCH}^{total,slot,\mu}\right)$ of a quantity of non-overlapping control channel elements.

Optionally, if it is specified in a protocol that the first indication information exists, and the network side device does not send the first indication information to the terminal device, the terminal device determines that the first indication information indicates a default value. The default value may be a first value or a second value. For example, the second value is indicated by default. Based on this possible implementation, working complexity of the terminal device is reduced, and PDCCH configuration flexibility is improved.

Optionally, based on Solution one or Solution two in the foregoing scheduling solutions, the terminal device further performs the following steps.

The terminal device receives second indication information sent by the network side device, where if the second indication information indicates a first value, the second indication information indicates that a sum of a quantity of PDCCH candidates that are configured by the terminal device in any unit time of the first cell and that carry the DCI of the second cell and a quantity of PDCCH candidates that are configured in any unit time of the second cell and that carry the DCI of the second cell is less than or equal to a PDCCH candidate monitoring capability of the terminal device, and/or a sum of the quantity of non-overlapping control channel elements related to the PDCCH candidates that are configured in any unit time of the first cell and that carry the DCI of the second cell and a quantity of non-overlapping control channel elements related to the PDCCH candidates that are configured in any unit time of the second cell and that carry the DCI of the second cell is less than or equal to the PDCCH candidate monitoring capability of the terminal device; and if the second indication information indicates a second value, the first indication information indicates that the sum of the quantity of PDCCH candidates that are configured by the terminal device in any unit time of the first cell and that carry the DCI of the second cell and the quantity of PDCCH candidates that are configured in any unit time of the second cell and that carry the DCI of the second cell is allowed to be greater than the PDCCH candidate monitoring capability of the terminal device, and/or the sum of the quantity of non-overlapping control channel elements related to the PDCCH candidates that are configured in any unit time of the first cell and that carry the DCI of the second cell and the quantity of non-overlapping control channel elements related to the PDCCH candidates that are configured in any unit time of the second cell and that carry the DCI of the second cell is allowed to be greater than the PDCCH candidate monitoring capability of the terminal device.

The any unit time in a R15-related working scenario may be a slot, and the any unit time in a R16-related working scenario may be a span. This is not limited in the embodiments of this application. Specific values of the first value and the second value are not limited. For example, the first value is 0, and the second value is 1. The PDCCH candidate monitoring capability of the terminal device may be determined based on related descriptions of steps 902 to 905 in the resource scheduling method shown in FIG. 9, or related descriptions of step 701 in the resource scheduling method shown in FIG. 7, or related descriptions of step 801 in the resource scheduling method shown in FIG. 8. Details are not described herein again.

The PDCCH candidate monitoring capability of the terminal device includes an upper limit $\min\left(M_{PDCCH}^{max,slot,\mu}, M_{PDCCH}^{total,slot,\mu}\right)$ of a quantity of monitored PDCCH candidates and an upper limit $\min\left(C_{PDCCH}^{max,slot,\mu}, C_{PDCCH}^{total,slot,\mu}\right)$ of a quantity of non-overlapping control channel elements.

Optionally, if it is specified in a protocol that the first indication information exists, and the network side device does not send the first indication information to the terminal device, the terminal device determines that the first indication information indicates a default value. The default value may be a first value or a second value. For example, the second value is indicated by default. Based on this possible implementation, working complexity of the terminal device is reduced, and PDCCH configuration flexibility is improved.

In the embodiments of this application, the network side device configures positions of resources of downlink control channel PDCCH candidates of a first cell for the terminal device, downlink control information DCI of a second cell is carried on at least one PDCCH candidate of the configured PDCCH candidates of the first cell, and the DCI of the second cell is used for scheduling positions of resources for the terminal device to perform data communication in the second cell. By implementing the embodiments of this application, resources in a primary cell can be scheduled by using a secondary cell, thereby improving scheduling flexibility.

Referring to FIG. 7, FIG. 7 is a schematic flowchart of another resource scheduling method according to an embodiment of this application. The resource scheduling method shown in FIG. 7 may be implemented in combination with Solution one or Solution two in the scheduling solutions shown in FIG. 2, and is used when subcarrier spacings of a PCell and an SCell are the same. As shown in FIG. 7, the resource scheduling method includes but is not limited to the following steps.

701. A network side device sends first parameter information to a terminal device.

702. The terminal device receives the first parameter information sent by the network side device, where the first parameter information is used for configuring a first cell and a second cell as $r$ cells to perform PDCCH candidate monitoring capability allocation $r$ is a positive number, and a value of $r$ may be a non-integer such as 1.5. Optionally, before receiving the first configuration parameter sent by the network side device, the terminal device further performs the following steps:

The terminal device reports capability information to the network side device, or does not report the capability information when a capability parameter is a preset value. Correspondingly, the network side device determines a capability parameter R based on the report of the terminal device, or determines the capability parameter R based on the preset value, where R is used for determining $r$, and a value of $r$ is less than or equal to the capability parameter R of the terminal device. Optionally, it is specified in a protocol that the terminal device reports the capability information, and if the terminal device does not report the capability information, the network side device considers by default that R=1. If it is not specified in a protocol that the terminal device can report R, the network side device determines that R=1.

For example, when a PCell and an SCell schedule a PCell, the terminal device reports R. If R=1, it indicates that the terminal device is capable of corresponding the PCell and the SCell to 1 cell; or if R=2, it indicates that the terminal device is capable of corresponding the PCell and the SCell to 2 cells. If the terminal device does not report the capability information, the network side device determines that R=1; or if it is not specified in a protocol that the terminal device can report R, the network side device determines that R=1, where R=1 indicates that the terminal device is capable of corresponding the PCell and the SCell to 1 cell.

Optionally, during PDCCH candidate monitoring capability allocation, the PDCCH candidate monitoring capability of the terminal device may be further preset by using a protocol, which includes but is not limited to the following several possible implementations.

In a possible implementation, it is preset in a protocol that the terminal device configures the first cell and the second cell as $r$ cells to perform PDCCH candidate monitoring capability allocation, where $r$ is a positive number, for example, $r$ is 1 or 2.

In a possible implementation, it is preset in a protocol that the terminal device configures the first cell as $r_1$ cells to perform PDCCH candidate monitoring capability allocation, and configures the second cell as $r_2$ cells to perform PDCCH candidate monitoring capability allocation, where $r_1$ and $r_2$ are positive numbers and may be the same or different, for example, $r_1$ is 1, and $r_2$ is 1.

In a possible implementation, when subcarrier spacings of downlink active BWPs of the first cell and the second cell are the same, it is preset in a protocol that the terminal device configures the first cell and the second cell as $r$ cells to perform PDCCH candidate monitoring capability allocation, where $r$ is a positive number, for example, $r$ is 1 or 2.

The PCell and the SCell are configured as $r$ cells for PDCCH candidate monitoring capability allocation. The PCell is configured as $r_1$ cells for PDCCH candidate monitoring capability allocation when scheduling the PCell itself, and the SCell is configured as $r_2$ cells for PDCCH candidate monitoring capability allocation when scheduling the PCell. $r_1+r_2=r$, a value of $r$ is less than R, and for example, $1 < r < R$ . For example, when R=2, $r$ may be 1.5.

During PDCCH candidate monitoring capability allocation, the PCell scheduled by the PCell and the SCell is configured as $r$ cells, and the PCell and the SCell scheduling the PCell are configured as $r$ cells. Specifically, PDCCH candidate monitoring capability allocation is implemented in combination with steps 904 and 905 in the resource scheduling method shown in FIG. 9. Cells with a same subcarrier spacing are grouped into one group, and a corresponding PDCCH candidate monitoring capability is allocated from a total PDCCH candidate monitoring capability of the terminal device based on a ratio of a quantity of cells in the group to a total quantity of cells, to obtain an upper limit of a quantity of PDCCH candidates and an upper limit of a quantity of non-overlapping CCEs corresponding to the subcarrier spacing. When counting is performed on cells with a same subcarrier spacing, a PCell scheduled by the PCell and the SCell occupies only one count. That is, if the PCell and the SCell schedule a same cell, the PCell and the SCell occupy only one count in $N_{cells,1}^{DL,\mu}$ or $N_{cells,0}^{DL,\mu}$ . Assuming that a quantity of PCells that can be scheduled by the PCell and the SCell is $N_{cells,2}^{DL,\mu}$ , a total quantity of cells that participate in PDCCH candidate monitoring capability allocation is

$$\sum_{\mu=0}^{3}\left(N_{cells,0}^{DL,\mu} + \gamma \cdot N_{cells,1}^{DL,\mu} + r \cdot N_{cells,2}^{DL,\mu}\right)$$

. In addition, assuming that there is no multi-TRP cell, that is, $N_{cells,1}^{DL,\mu}=0$ . In this case, there are 6 cells: 2 cells with a subcarrier spacing of 15 KHz, 2 cells with a subcarrier spacing of 30 KHz, 1 cell with a subcarrier spacing of 60 KHz, and 1 cell with a subcarrier spacing of 120 KHz. One of the cells with a subcarrier spacing of 15 KHz is a PCell, and the PCell may be scheduled by the PCell and the SCell jointly. The PCell is configured as 1 cell, and is multiplied by an obtained value of $r$, where it is assumed that $r$ is 1.5. A total quantity of cells that finally participate in PDCCH candidate monitoring capability allocation is

$$\sum_{\mu=0}^{3}\left(N_{cells,0}^{DL,\mu} + \gamma \cdot N_{cells,1}^{DL,\mu} + r \cdot N_{cells,2}^{DL,\mu}\right) = 5 + r = 6.5$$

.

703. The network side device sends first configuration information to the terminal device.

704. The terminal device receives the first configuration information sent by the network side device.

For specific implementations of step 703 and step 704, refer to descriptions of related steps shown in FIG. 2. Details are not described herein again.

Optionally, when the configured PDCCH candidates are allowed to be greater than a PDCCH candidate monitoring capability of the terminal device, a quantity of PDCCH candidates that are configured in any unit time of the first cell and that carry the DCI of the second cell is allowed to be greater than the PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device. The terminal device further performs overbooking processing. Overbooking processing is mainly to determine a priority of a search space on a USS. For example, there may be a search space for scheduling a PCell on both a USS of a PCell and a USS of an SCell. Therefore, determination of the priority is complex. The priority may be preset by a protocol in combination with a scheduling solution, or may be configured by the network side device. Determination of the priority of the search space on the USS may include but is not limited to the following several manners.

In an implementation, each search space in terminal device USS of the second cell and the first cell in a cell group that includes a PDCCH candidate that can be used for carrying the downlink control information DCI of the second cell is sorted, and a priority of each search space in PDCCH candidate monitoring capability allocation is determined based on a sorting result.

For example, search spaces of USSs of all PCells and SCells are sorted, and index values of search spaces that are in the PCells and the SCells and that can schedule a PCell cannot be the same. Therefore, priorities may be determined based on the index values of the search spaces. For example, the terminal device configures a cell A as a PCell and a cell B as an SCell. It is assumed that index values of search spaces in a USS of the cell A are 0xx to 100, and index values of search spaces in a USS of the cell B are 101 to 1xx. In this case, a smaller index value indicates a higher priority.

In an implementation, the terminal device determines the priority of each search space in the first cell and the second cell in a cell group that includes a PDCCH candidate that can be used for carrying the downlink control information DCI of the second cell.

a) A priority of each search space in the terminal device-specific search space USS of the first cell is higher than a priority of each search space in the USS of the second cell. For example, it is specified in a protocol or configured by a base station that a priority of a search space of an SCell is higher than that of a PCell, and the terminal device learns, according to the protocol, that priorities of all search spaces of the SCell are higher than those of all search spaces of the PCell.

b) A priority of each search space in the terminal device-specific search space USS of the second cell is higher than a priority of each search space in the USS of the first cell. For example, it is specified in a protocol or configured by a base station that a priority of a search space in a USS of the PCell is higher than that of the SCell, and the terminal device learns, according to the protocol, that priorities of all search spaces in the USS of the PCell is higher than those of all search spaces in the USS of the SCell.

c) In the USSs of the first cell and the second cell, a smaller index value corresponding to a search space indicates a higher priority of the search space. In search spaces with a same index value, a priority of a search space in the USS of the first cell is higher than that of a search space in the USS of the second cell. For example, it is specified in a protocol or configured by a base station that index values of search spaces in the USS of the SCell include 001, 002, 003, and the like, and index values of search spaces in the USS of the PCell include 003, 005, 007, and the like. Priorities of the search spaces 001 and 002 of the SCell are higher than those of the search spaces of the PCell, and a priority of the search space 003 of the SCell is higher than that of the search space 003 of the PCell.

d) In the USSs of the first cell and the second cell, a smaller index value corresponding to a search space indicates a higher priority of the search space. In search spaces with a same index value, a priority of a search space in the USS of the second cell is higher than that of a search space in the USS of the first cell. For example, it is specified in a protocol or configured by a base station that index values of search spaces in the USS of the SCell include 001, 002, 003, and the like, and index values of search spaces in the USS of the PCell include 003, 005, 007, and the like. Priorities of the search spaces 001 and 002 of the SCell are higher than those of the search spaces 003, 005, and 007 of the PCell, and a priority of the search space 003 of the SCell is higher than that of the search space 003 of the PCell.

e) In search spaces in the USS of the first cell and search spaces in the USS of the second cell, a smaller index value corresponding to a search space indicates a higher priority of the search space. The network-side device ensures that the index values of the search spaces in the USS of the first cell and the search spaces in the USS of the second cell that include a PDCCH candidate that can be used for carrying the downlink control information DCI of the second cell are different from each other. For example, it is specified in a protocol or configured by a base station that index values of search spaces in the USS of the SCell include 001, 002, 003, and the like, and index values of search spaces in the USS of the PCell cannot be 001, 002, 003, and the like, and may be 101, 102, 103, and the like. It can be ensured that the index values of the search spaces in the USSs of the SCell and the PCell are different from each other.

Optionally, the network side device determines, based on the priority, a PDCCH candidate that is in the configured PDCCH candidates and that can send the DCI of the second cell. Correspondingly, the terminal device determines, based on the priority, a PDCCH candidate that needs to be monitored in the configured PDCCH candidates.

The terminal device first subtracts a quantity of PDCCH candidates associated with a CSS used for monitoring/a quantity of non-overlapping CCEs from the upper limit of the quantity of PDCCH candidates monitored in 1 slot/span/the upper limit of the quantity of non-overlapping CCEs in 1 slot respectively, to obtain the quantity

$$M_{PDCCH}^{uss} = \min\left(M_{PDCCH}^{\max,slot,\mu}, M_{PDCCH}^{total,slot,\mu}\right) - M_{PDCCH}^{css}$$ of PDCCH candidates and the total quantity

$$C_{PDCCH}^{uss} = \min\left(C_{PDCCH}^{\max,slot,\mu}, C_{PDCCH}^{total,slot,\mu}\right) - C_{PDCCH}^{css}$$ of remaining non-overlapping CCEs respectively.

For the USSs, starting from a highest priority, a quantity of PDCCH candidates/a quantity of non-overlapping CCEs associated with each search space are subtracted from $M_{PDCCH}^{USS}$ and $C_{PDCCH}^{USS}$ respectively according to a priority order of the search spaces obtained above. For a USS index value, if the quantity of PDCCH candidates/the total quantity of remaining non-overlapping CCEs after subtraction are still greater than or equal to 0, the network side device can send the DCI of the second cell in a PDCCH candidate corresponding to the USS index value. Correspondingly, the terminal device needs to monitor the PDCCH candidate corresponding to the USS index value. For a USS index value, if at least one of the quantity of PDCCH candidates/the total quantity of remaining non-overlapping CCEs after subtraction is less than 0, the network side device cannot send the DCI of the second cell in a PDCCH candidate corresponding to the USS index value and a PDCCH candidate corresponding to a search space greater than the USS index value. Correspondingly, the terminal device does not need to monitor the PDCCH candidate corresponding to the USS index value and the PDCCH candidate corresponding to a search space greater than the USS index value.

The resource scheduling method shown in FIG. 7 is also applicable to a scenario in which a PCell and an SCell simultaneously schedule an SCell.

In the embodiments of this application, the terminal device reports the capability information to the network side device, the network side device determines the capability parameter R based on the report of the terminal device, and further determines $r$ based on R. The network side device configures the first cell and the second cell as $r$ cells to perform PDCCH candidate monitoring capability allocation. According to the embodiments of this application, when subcarrier spacings are the same, and a PCell and an SCell simultaneously schedule an SCell or a PCell, a PDCCH candidate monitoring capability allocation solution and corresponding overbooking processing are implemented, so that it is easier for the terminal device to monitor a PDCCH candidate of the terminal device. In addition, by determining a priority of a search space of a USS, the terminal device can receive, based on the priority, a PDCCH in a USS with a higher priority, thereby improving user experience.

Referring to FIG. 8, FIG. 8 is a schematic flowchart of still another resource scheduling method according to an embodiment of this application. The resource scheduling method shown in FIG. 8 may be implemented in combination with Solution one or Solution two in the scheduling solutions shown in FIG. 2, and is used when subcarrier spacings of a PCell and an SCell are different. As shown in FIG. 5, the resource scheduling method includes but is not limited to the following steps.

801. A network side device sends second parameter information to a terminal device.

802. The terminal device receives the second parameter information sent by the network side device, where the second parameter information is used for configuring the first cell as $r_1$ cells to perform PDCCH candidate monitoring capability allocation, and configuring the second cell as $r_2$ cells to perform PDCCH candidate monitoring capability allocation, where $r_1$ and $r_2$ are positive numbers and may be the same or different. The network side device may determine $r_1$ and $r_2$ according to a load status of a cell, to balance load. For example, values thereof may be 0.5, 1, or the like.

In an implementation, the second parameter information includes $r_1$ and $r_2$.

In an implementation, the second parameter information includes $r_2$, and $r_1$ is a preset value 1, where the preset value may be a value specified in a protocol.

In an implementation, the second parameter information includes $r$, and $r_1 = r_2 = r$, or $r_1 = r_2 = r/2$.

Before receiving the second configuration parameter sent by the network side device, the terminal device further performs the following steps:

In a possible implementation, the terminal device reports capability information to the network side device, or does not report the capability information when a capability parameter is a preset value. Correspondingly, the network side device determines a capability parameter R based on the report of the terminal device, or determines the capability parameter R based on the preset value, where R is used for determining $r_1$ and $r_2$. For example, $r_1 + r_2$ is greater than or equal to 1 and is less than or equal to R. Optionally, it is specified in a protocol that the terminal device reports the capability information, and if the terminal device does not report the capability information, the network side device considers by default that R=1. If it is not specified in a protocol that the terminal device can report R, the network side device determines that R=1.

In a possible implementation, the terminal device reports capability information to the network side device, or does not report the capability information when a capability parameter is a preset value. Correspondingly, the network side device determines capability parameters R1 and R2 based on the capability information reported by the terminal device, or determines the capability parameters R1 and R2 based on the preset value, where R1 and R2 are used for determining $r_1$ and $r_2$. For example, $r_1$ is greater than or equal to R1 and is less than or equal to 1, and $r_2$ is greater than or equal to R2 and is less than or equal to 1; or $r_1$ is less than or equal to R1 and $r_2$ is less than or equal to R2.

In a possible implementation, the terminal device reports capability information to the network side device, or does not report the capability information when a capability parameter is a preset value. Correspondingly, the network side device determines a capability parameter R1 based on the report of the terminal device, or determines the capability parameter R1 based on the preset value, where R1 is used for determining $r_1$ and $r_2$. For example, $r_1$ is greater than or equal to R1 and is less than or equal to 1, and $r_2$ is greater than or equal to R1 and is less than or equal to 1; or $r_1$ is less than or equal to R1 and $r_2$ is less than or equal to R1.

For example, when a PCell and an SCell schedule a PCell, the terminal device reports R. If R=1, it indicates that the terminal device is capable of corresponding the PCell and the SCell to 1 cell; or if R=2, it indicates that the terminal device is capable of corresponding the PCell and the SCell to 2 cells. If the terminal device does not report the capability information, the network side device determines that R=1; or if it is not specified in a protocol that the terminal device can report R, the network side device determines that R=1, where R=1 indicates that the terminal device is capable of corresponding the PCell and the SCell to 1 cell. It is assumed that R=2, it is specified is a protocol that $r_1$ is 1, and the network side device may configure $r_2$ as 0.5. That is, a PCell is configured as 1 cell to perform PDCCH candidate monitoring capability allocation, and an SCell is configured as 0.5 cell to perform PDCCH candidate monitoring capability allocation.

Optionally, during PDCCH candidate monitoring capability allocation, the PDCCH candidate monitoring capability of the terminal device may be further preset by using a protocol, which includes but is not limited to the following several possible implementations.

In a possible implementation, it is preset in a protocol that the terminal device configures the first cell and the second cell as $r$ cells to perform PDCCH candidate monitoring capability allocation, where $r$ is a positive number, for example, $r$ is 1 or 2.

In a possible implementation, it is preset in a protocol that the terminal device configures the first cell as $r_1$ cells to perform PDCCH candidate monitoring capability allocation, and configures the second cell as $r_2$ cells to perform PDCCH candidate monitoring capability allocation, where $r_1$ and $r_2$ are positive numbers and may be the same or different, for example, $r_1$ is 1, and $r_2$ is 1.

In a possible implementation, when subcarrier spacings of downlink active BWPs of the first cell and the second cell are different, it is preset in a protocol that the terminal device configures the first cell as $r_1$ cells to perform PDCCH candidate monitoring capability allocation, and configures the second cell as $r_2$ cells to perform PDCCH candidate monitoring capability allocation, where $r_1$ and $r_2$ are positive numbers and may be the same or different, for example, $r_1$ is 1, and $r_2$ is 1.

Optionally, during PDCCH candidate monitoring capability allocation, the following rule is further met. A subcarrier spacing of an active bandwidth part BWP of the first cell is $\mu_1$, and a PDCCH candidate that is of the first cell and that can be used for carrying the DCI of the second cell is configured as $r_1$ cells with a subcarrier spacing of $\mu_1$ to perform PDCCH candidate monitoring capability allocation; and a subcarrier spacing of an active bandwidth part BWP of the second cell is $\mu_2$, and a PDCCH candidate that is of the second cell and that can be used for carry the DCI of the second cell is configured as $r_2$ cells with a subcarrier spacing of $\mu_2$ to perform PDCCH candidate monitoring capability allocation, where $\mu_1$ and $\mu_2$ are equal or not equal.

For example, the first cell is an SCell, and the second cell is a PCell. It is assumed that a subcarrier spacing of an active bandwidth part BWP of the PCell is 30 KHz, and a PDCCH candidate that is of the PCell and that can be used for carrying DCI of the PCell corresponds to $r_1$ cells with a subcarrier spacing of 30 KHz in PDCCH candidate monitoring capability allocation. It is assumed that a subcarrier spacing of an active bandwidth part BWP of the SCell is 15 KHz, and a PDCCH candidate that is of the SCell and that can be used for carrying the DCI of the PCell corresponds to $r_2$ cells with a subcarrier spacing of 15 KHz in PDCCH candidate monitoring capability allocation. 803. The network side device sends first configuration information to the terminal device.

804. The terminal device receives the first configuration information sent by the network side device.

For specific implementations of step 803 and step 804, refer to descriptions of related steps shown in FIG. 2. Details are not described herein again.

The resource scheduling method shown in FIG. 8 is also applicable to a scenario in which a PCell and an SCell simultaneously schedule an SCell.

In the embodiments of this application, the terminal device reports the capability information to the network side device, the network side device determines the capability parameter R based on the report of the terminal device, and further determines $r$ based on R. The network side device configures the first cell and the second cell as $r$ cells to perform PDCCH candidate monitoring capability allocation. According to the embodiments of this application, when subcarrier spacings are the same, and a PCell and an SCell simultaneously schedule an SCell or a PCell, a PDCCH candidate monitoring capability allocation solution and corresponding overbooking processing are implemented, so that it is easier for the terminal device to monitor a PDCCH candidate of the terminal device.

To better understand the embodiments of this application, the following describes an overall procedure of a resource scheduling method according to an embodiment of this application. As shown in FIG. 9, the resource scheduling method includes the following step 901 to step 908.

901. A network side device performs cell configuration for a terminal device.

The cell configuration is used for indicating configuration of a serving cell that serves the terminal device for the terminal device. Optionally, the terminal device may be configured in different working scenarios. For example, two cell groups are configured. The first cell group includes $N_{cells,0}^{DL}$ serving cells. These serving cells are not configured with CORESET Pool Indexes (CORESET Pool Indexes), or are configured with CORESET Pool Indexes, but a same value is configured for all CORESETs of all downlink BWPs of each cell. That is, the first cell group does not support multi-TRP serving cells. The second cell group includes $N_{cells,1}^{DL}$ serving cells. On any downlink BWP of these serving cells, a CORESET Pool Index of a first CORESET is configured as 0, and a CORESET Pool Index of a second CORESET is configured as 1. That is, the second cell group may support multi-TRP serving cells.

902. The terminal device reports monitoring capability information to the network side device, and correspondingly, the network side device receives the monitoring capability information reported by the terminal device.

903. The network side device determines a PDCCH candidate monitoring capability of the terminal device based on the monitoring capability information reported by the terminal device.

The following describes the PDCCH candidate monitoring capability of the terminal device based on different working scenarios of the terminal device.

(1) An R15 non-NR-DC-related working scenario and the PDCCH candidate monitoring capability of the terminal device

R15-related working scenarios include: R15 non-multi-TRP single cell/CA, R15 multi-TRP single cell/CA, and R15 non-multi-TRP single cell/CA plus multi-TRP single cell/CA.

When $N_{cells,0}^{DL} \geq 1$ and $N_{cells,1}^{DL} = 0$, the terminal device is configured in an R15 non-multi-TRP single cell/CA working scenario.

When $N_{cells,0}^{DL} = 0$ and $N_{cells,1}^{DL} \geq 1$, the terminal device is configured in an R15 multi-TRP single cell/CA working scenario.

When $N_{cells,0}^{DL} \geq 1$ and $N_{cells,1}^{DL} \geq 1$, the terminal device is configured in an R15 non-multi-TRP single cell/CA plus multi-TRP single cell/CA working scenario.

The terminal device may report a PDCCH candidate monitoring capability (pdcch-BlindDetectionCA) converted to a quantity of cells, and/or report a monitoring capability parameter R. A value of R may determine that a quantity of serving cells is $N_{cells,0}^{DL} + R \cdot N_{cells,1}^{DL}$, and when the terminal device does not perform reporting, R=1.

When the terminal device can allocate a processing capability by using PDCCHs of two TRPs as PDCCHs of two cells, the terminal device may report that R=2. If the terminal device can process PDCCHs of two TRPs as PDCCHs of only 1 cell, the terminal device reports that R=1.

If a terminal device reports, in UE-NR-Capability, that carrier aggregation of more than 4 serving cells can be supported, and PDCCH monitoring capability configuration (Monitoring Capability Config) is not configured for any downlink cell, or the terminal device detects that PDCCH Monitoring Capability Config is configured as R15 PDCCH monitoring capability for all downlink cells of a PDCCH, the terminal device needs to provide indication information in UE-NR-Capability, to indicate a maximum quantity of PDCCH candidates and a maximum quantity of non-overlapping CCEs that can be detected in each slot when carrier aggregation of more than 4 cells is configured for the terminal device.

In a non-NR-DC mode, the terminal device determines that the maximum quantity of PDCCH candidates and the maximum quantity of non-overlapping CCEs that can be detected in each slot are $N_{cells}^{cap}$ downlink cells.

If the terminal device does not report pdcch-BlindDetectionCA, $N_{cells}^{cap}$ is $N_{cells,0}^{DL} + R \cdot N_{cells,1}^{DL}$, where $N_{cells,0}^{DL} + N_{cells,1}^{DL}$ is a quantity of configured downlink cells. Otherwise, $N_{cells}^{cap}$ is pdcch-BlindDetectionCA reported by the terminal device.

For carrier aggregation of more than 4 cells, the terminal device does not expect that the quantity of PDCCH candidates and the quantity of non-overlapping CCEs that are detected in each slot are greater than a value corresponding to $N_{cells}^{cap}$.

(2) An R15 NR-DC working scenario and the PDCCH candidate monitoring capability of the terminal device In an NR-DC mode, the terminal device determines a maximum quantity of PDCCH candidates and a maximum quantity of non-overlapping CCEs that can be detected in each slot:

For an MCG, $N_{cells}^{cap} = N_{cells}^{MCG}$, where $N_{cells}^{MCG}$ is pdcch-BlindDetection of the MCG reported by the terminal device. For an SCG, $N_{cells}^{cap} = N_{cells}^{SCG}$, where $N_{cells}^{MCG}$ is pdcch-BlindDetection of the SCG reported by the terminal device. For a cell group CG in NR-DC, the terminal device does not expect that the quantity of PDCCH candidates and the quantity of non-overlapping CCEs that are detected in each slot are greater than a value corresponding to $N_{cells}^{cap}$.

(3) An R16-related working scenario and the PDCCH candidate monitoring capabilities of the terminal device The R16-related working scenario includes R16 non-multi-TRP single cell/CA.

If the terminal device indicates, in UE-NR-Capability-r16, a carrier aggregation capability greater than X downlink cells, when the terminal device configures carrier aggregation of more than X downlink cells, the terminal device indicates, in the UE-NR-Capability-r16, a maximum quantity of PDCCH candidates and a maximum quantity of non-overlapping CCEs that can be detected in each span.

In a non-NR-DC mode, and PDCCH Monitoring Capability Config is configured as R16 PDCCH monitoring capability for all downlink cells in a detected PDCCH, the terminal device determines that a maximum quantity of PDCCH candidates and a maximum quantity of non-overlapping CCEs that can be detected in each span correspond to $N_{cells}^{cap-r16}$ downlink cells.

If the terminal device does not report pdcch-BlindDetectionCA-r16, $N_{cells}^{cap-r16}$ is a quantity of configured downlink cells;

otherwise, $N_{cells}^{cap-r16}$ is pdcch-BlindDetectionCA-r16 reported by the terminal device.

(4) R15- and R16-related working scenarios and the PDCCH candidate monitoring capability of the terminal device The R15- and R16-related working scenarios include non-multi-TRP CAin R15 and R16.

If the terminal device correspondingly indicates, in UE-NR-Capability-r15 or UE-NR-Capability-r16, a CA capability of more than Y downlink cells or more than Z downlink cells, when the terminal device configures CA of more than Y or Z downlink cells, and at least one cell is from the Y downlink cells and at least one cell is from the Z downlink cells, the terminal device indicates, in the UE-NR-Capability-r15 or the UE-NR-Capability-r16, a maximum quantity of PDCCH candidates and a maximum quantity of non-overlapping CCEs by using PDCCH Monitoring Capability Config as R15 PDCCH monitoring capability or R16 PDCCH monitoring capability.

In a non-DC mode, a capability of determining, by the terminal device, a maximum quantity of PDCCH candidates and a maximum quantity of non-overlapping CCEs that are detected in each slot or each span of $N_{cells,r15}^{cap-r16}$ downlink cells or $N_{cells,r16}^{cap-r16}$ downlink cells is:

If the terminal device does not report pdcch-BlindDetectionCA-r15, $N_{cells,r15}^{cap-r16}$ is a quantity of configured downlink cells;

otherwise, $N_{cells,r15}^{cap-r16}$ is pdcch-BlindDetectionCA-r15 reported by the terminal device.

If the terminal device does not report pdcch-BlindDetectionCA-r16, $N_{cells,r16}^{cap-r16}$ is a quantity of configured downlink cells;

otherwise, $N_{cells,r16}^{cap-r16}$ is pdcch-BlindDetectionCA-r16 reported by the terminal device.

904. If a quantity of cells configured by the network side device for the terminal device is less than or equal to the PDCCH candidate monitoring capability of the terminal device, it is determined that an upper limit of the PDCCH candidate monitoring capability of the terminal device in each cell is a value specified in the protocol shown in Table 2-1 to Table 2-4. Step 906 is then performed.

If the terminal device does not report pdcch-BlindDetectionCA, or no blind detection factor R (BDFactorR) is configured, $\gamma = R$; and
if the terminal device reports pdcch-BlindDetectionCA, BDFactorR may be configured for the terminal device, and a value of is $\gamma = 1$ or $\gamma = R$. The pdcch-BlindDetectionCA may be pdcch-BlindDetectionCA, pdcch-BlindDetectionCA-r15, or pdcch-BlindDetectionCA-r16 in step 203.

When the quantity of configured cells is less than or equal to a capability of the terminal device (when $\gamma = 1$, a cell including 2 TRPs is considered as 1 cell, and when $\gamma = 2$, a cell including 2 TRPs is considered as 2 cells):

in each non-multi-TRP cell and each TRP, both a quantity of PDCCH candidates and a quantity of non-overlapping CCEs that need to be monitored by the terminal device are less than or equal to an upper limit of a PDCCH candidate monitoring capability of a single terminal device; and
in each multi-TRP cell, both a quantity of PDCCH candidates and a quantity of non-overlapping CCEs that need to be monitored by the terminal device are less than or equal to $\gamma$ times of an upper limit of a PDCCH candidate monitoring capability of a single terminal device.

905. If the quantity of cells configured by the network side device for the terminal device is greater than the PDCCH candidate monitoring capability of the terminal device, PDCCH candidate monitoring capability allocation is performed. Step 906 is then performed.

The PDCCH candidate monitoring capability allocation includes but is not limited to: determining an upper limit of the PDCCH candidate monitoring capability of the terminal device in a cell with each subcarrier spacing, determining an upper limit of the PDCCH candidate monitoring capability of the terminal device in each cell, and determining an upper limit of the PDCCH candidate monitoring capability of the terminal device in each TRP.

When the quantity of configured cells is greater than the capability of the terminal device, the network side device groups cells, for example, cells with a same subcarrier spacing are divided into a group, and a corresponding capability is allocated from the total PDCCH candidate monitoring capability of the terminal device based on a ratio of the quantity of cells (each multi-TRP may be considered as $\gamma$ cells) in the group to the total quantity of cells, to obtain an upper limit of a total quantity of PDCCH candidates and an upper limit of a total quantity of non-overlapping CCEs that correspond to the subcarrier spacing.

For a subcarrier spacing, for all cells with a same subcarrier spacing, both a quantity of PDCCH candidates and a quantity of non-overlapping CCEs that need to be monitored by the terminal device are less than or equal to an upper limit of a total quantity.

In each non-multi-TRP cell, both a quantity of PDCCH candidates and a quantity of non-overlapping CCEs that need to be monitored by the terminal device are less than or equal to a minimum value of an upper limit of a PDCCH candidate monitoring capability of a single terminal device and an upper limit of a total quantity corresponding to the subcarrier spacing.

In each multi-TRP cell, both a quantity of PDCCH candidates and a quantity of non-overlapping CCEs that need to be monitored by the terminal device are less than or equal to a minimum value of $\gamma$ times of an upper limit of a PDCCH candidate monitoring capability of a single terminal device and an upper limit of a total quantity corresponding to the subcarrier spacing.

In a TRP in each multi-TRP cell, both a quantity of PDCCH candidates and a quantity of non-overlapping CCEs that need to be monitored by the terminal device are less than or equal to a minimum value of an upper limit of a PDCCH candidate monitoring capability of a single terminal device and an upper limit of a total quantity corresponding to the subcarrier spacing.

Optionally, the PDCCH candidate monitoring capability of the terminal device may be allocated in the following manner:

In an implementation, if active BWPs of $N_{cells,0}^{DL,\mu} + N_{cells,1}^{DL,\mu}$ downlink cell whose SCS is $\mu$ are configured for the terminal

device, and $\sum_{\mu=0}^{3} \left( N_{cells,0}^{DL,\mu} + \gamma \cdot N_{cells,1}^{DL,\mu} \right) \le N_{cells}^{cap}$, the PDCCH candidate monitoring capability of the terminal device is allocated on an active downlink BWP of a scheduling cell. $N_{cells}^{cap}$ may be $N_{cells}^{cap}$, $N_{cells}^{cap-r16}$, $N_{cells,r15}^{cap-r16}$, or $N_{cells,r16}^{cap-r16}$ in step 903.

When the scheduling cell belongs to a downlink cell in $N_{cells,0}^{DL,\mu}$ cells, in each slot of each scheduled cell, the terminal device does not need to detect more than $M_{PDCCH}^{total,slot,\mu} = M_{PDCCH}^{max,slot,\mu}$ PDCCH candidates, and does not need to detect more than $C_{PDCCH}^{total,slot,\mu} = C_{PDCCH}^{max,slot,\mu}$ non-overlapping CCEs.

When the scheduling cell belongs to a downlink cell in $N_{cells,1}^{DL,\mu}$ cells, in each slot of each scheduled cell, the terminal device does not need to detect more than $M_{PDCCH}^{total,slot,\mu} = \gamma \cdot M_{PDCCH}^{max,slot,\mu}$ PDCCH candidates, and does not need to detect more than $C_{PDCCH}^{total,slot,\mu} = \gamma \cdot C_{PDCCH}^{max,slot,\mu}$ non-overlapping CCEs.

When the scheduling cell belongs to a downlink cell in $N_{cells,1}^{DL,\mu}$ cells, on CORESETs with a same CORESET Pool Index value in each slot of each scheduled cell, the terminal device does not need to detect more than $M_{PDCCH}^{max,slot,\mu}$

PDCCH candidates, and does not need to detect more than $C_{PDCCH}^{max,slot,\mu}$ non-overlapping CCEs.

In an implementation, if $N_{cells,0}^{DL,\mu} + N_{cells,1}^{DL,\mu}$ downlink cells whose SCS is $\mu$ are configured for the terminal device

$$\sum_{\mu=0}^{3}\left(N_{cells,0}^{DL,\mu} + \gamma \cdot N_{cells,1}^{DL,\mu}\right) > N_{cells}^{cap}$$

and , a downlink BWP of an active cell is an active BWP of the active cell, and a downlink BWP of an inactive cell is a BWP whose sequence number is firstActiveDownlinkBWP-Id of the inactive cell.

In each slot of an active downlink BWP of a scheduling cell of the $N_{cells,0}^{DL} + N_{cells,1}^{DL}$ downlink cells, the terminal device does not need to detect more than

$$M_{PDCCH}^{total,slot,\mu} = N_{cells}^{cap} \cdot M_{PDCCH}^{max,slot,\mu} \cdot \left(N_{cells,0}^{DL,\mu} + \gamma \cdot N_{cells,1}^{DL,\mu}\right) / \sum_{j=0}^{3}\left(N_{cells,0}^{DL,j} + \gamma \cdot N_{cells,1}^{DL,j}\right)$$

PDCCH candidates, and does

$$C_{PDCCH}^{total,slot,\mu} = N_{cells}^{cap} \cdot C_{PDCCH}^{max,slot,\mu} \cdot \left(N_{cells,0}^{DL,\mu} + \gamma \cdot N_{cells,1}^{DL,\mu}\right) / \sum_{j=0}^{3}\left(N_{cells,0}^{DL,j} + \gamma \cdot N_{cells,1}^{DL,j}\right)$$

not need to detect more than non-overlapping CCEs.

For each scheduled cell, if the scheduling cell belongs to a downlink cell in $N_{cells,0}^{DL,\mu}$ cells, in each slot of an active BWP whose subcarrier is configured as $\mu$, the terminal device does not need to detect more than

$\min\left(M_{PDCCH}^{max,slot,\mu}, M_{PDCCH}^{total,slot,\mu}\right)$ PDCCH candidates, and does not need to detect more than $\min\left(C_{PDCCH}^{max,slot,\mu}, C_{PDCCH}^{total,slot,\mu}\right)$ non-overlapping CCEs.

For each scheduled cell, if the scheduling cell belongs to a downlink cell in $N_{cells,1}^{DL,\mu}$ cells, in each slot of an active BWP whose subcarrier is configured as $\mu$, the terminal device does not need to detect more than

$\min\left(\gamma \cdot M_{PDCCH}^{max,slot,\mu}, M_{PDCCH}^{total,slot,\mu}\right)$ PDCCH candidates, and does not need to detect more than

$\min\left(\gamma \cdot C_{PDCCH}^{max,slot,\mu}, C_{PDCCH}^{total,slot,\mu}\right)$ non-overlapping CCEs.

On CORESETs with a same CORESET Pool Index value, the terminal device does not need to detect more than $\min\left(M_{PDCCH}^{max,slot,\mu}, M_{PDCCH}^{total,slot,\mu}\right)$ PDCCH candidates, and does not need to detect more than

$\min\left(C_{PDCCH}^{max,slot,\mu}, C_{PDCCH}^{total,slot,\mu}\right)$ non-overlapping CCEs.

The terminal device does not expect a configured CSS set. As a result, in any slot, a total quantity of detected PDCCH candidates or non-overlapping CCEs or a value of each scheduled cell is greater than a corresponding maximum value. For intra-cell scheduling or cross-cell scheduling, if both SCSs of downlink BWPs of a scheduling cell and a scheduled cell are configured as $\mu$, the terminal device does not expect that a quantity of monitored PDCCH candidates or non-overlapping CCEs configured for an SCell is greater than a corresponding maximum value.

906. The network side device configures positions of resources of PDCCH candidates of the terminal device in a cell based on the PDCCH candidate monitoring capability of the terminal device. PDCCH candidates configured for some cells are less than or equal to the upper limit of the PDCCH candidate monitoring capability of the terminal device; and PDCCH candidates configured for some cells are allowed to be higher than the upper limit of the PDCCH candidate monitoring capability of the terminal device, that is, overbooking occurs.

907. If overbooking occurs, the terminal device needs to perform overbooking processing in a cell in which overbooking occurs.

For specific implementations of step 906 and step 907, refer to related descriptions in the resource scheduling methods shown in FIG. 2 to FIG. 8. Details are not described herein again.

908. The network side device sends a PDCCH in the configured PDCCH candidates.

In correspondence to the methods provided in the foregoing method embodiments, an embodiment of this application further provides a corresponding apparatus. The apparatus includes corresponding modules configured to perform the foregoing embodiments. The module may be software, hardware, or a combination of software and hardware.

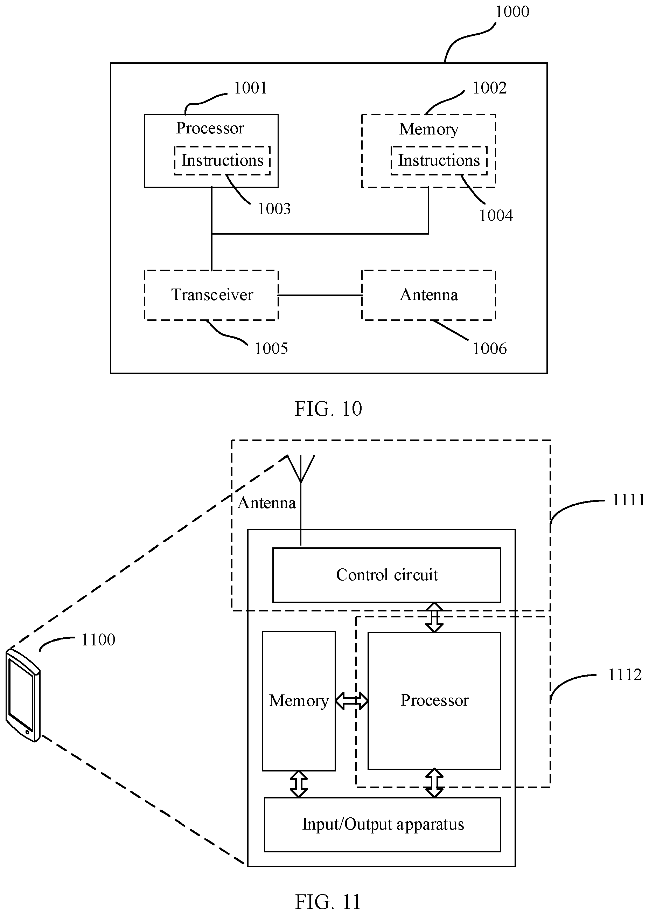

FIG. 10 is a schematic structural diagram of a communication apparatus. The communication apparatus 1000 may be a network side device, or may be a terminal device, or may be a chip, a chip system, a processor, or the like that supports a network device in implementing the foregoing methods, or may be a chip, a chip system, a processor, or the like that supports a terminal device in implementing the foregoing methods. The apparatus may be configured to implement the methods described in the foregoing method embodiments. For details, refer to the descriptions in the foregoing method embodiments.

The communication apparatus 1000 may include one or more processors 1001. The processor 1001 may also be referred to as a processing unit, a processing module, or the like, and may implement a control function. The processor 1001 may be a general-purpose processor, a dedicated processor, or the like. The general-purpose processor may be, for example, a central processing unit, and the dedicated processor may be, for example, a baseband processor. The baseband processor may be configured to process a communication protocol and communication data. The central processing unit may be configured to control the communication apparatus (for example, a base station, a baseband chip, a terminal, a terminal chip, a distributed unit (distributed unit, DU), or a centralized unit (centralized unit, CU)), execute a software program, and process data of the software program.

In an optional design, the processor 1001 may store instructions 1003, and the instructions 1003 may be run by the processor 1001 to cause the communication apparatus 1000 to perform the methods described in the foregoing method embodiments.

In another optional design, the processor 1001 may include a transceiver unit configured to implement receiving and sending functions. For example, the transceiver unit may be a transceiver circuit or an interface. The transceiver circuit, the interface, or an interface circuit configured to implement the receiving and sending functions may be separated, or may be integrated together. The transceiver circuit or the interface may be configured to read or write instructions, or the transceiver circuit or the interface may be configured to transmit a signal.

Optionally, the communication apparatus 1000 may include one or more memories 1002 that may store instructions 1004. The instructions 1004 may be run on the processor 1001, to cause the communication apparatus 1000 to perform the methods described in the foregoing method embodiments. Optionally, the memory 1002 may further store data. Optionally, the processor 1001 may also store instructions and/or data. The processor 1001 and the memory 1002 may be separately disposed, or may be integrated together. For example, the correspondence described in the foregoing method embodiments may be stored in the memory 1002 or stored in the processor 1001.

Optionally, the communication apparatus 1000 may further include a transceiver 1005 and/or an antenna 1006. The transceiver 1005 may be referred to as a transceiver unit, a transceiver machine, a transceiver circuit, a transceiver apparatus, a transceiver module, or the like, and is configured to implement receiving and sending functions. Optionally, in the embodiments of this application, when the communication apparatus 1000 is a terminal device, the communication apparatus may include various functional modules configured to perform step 202 in FIG. 2, or step 702 and step 704 in FIG. 7, or step 802 and step 804 in FIG. 8. When being a network side device, the communication apparatus 1000 is configured to perform step 201 in FIG. 2, or step 701 and step 703 in FIG. 7, or step 801 and step 803 in FIG. 8.

The processor and the transceiver described in this application may be implemented on an integrated circuit (integrated circuit, IC). The IC may include an analog IC, a radio frequency integrated circuit RFIC, a mixed-signal IC, an application-specific integrated circuit (application-specific integrated circuit, ASIC), and the like. A printed circuit on a printed circuit board (printed circuit board, PCB) may implement an IC.

The communication apparatus described in the foregoing embodiment may be a network side device or a terminal device. However, a scope of the apparatus described in this application is not limited thereto, and a structure of the communication apparatus may not be limited by FIG. 10. The communication apparatus may be:

(1) an independent integrated circuit IC, a chip, a chip system, or a subsystem of a chip system; or
(2) a receiver, a terminal, a cellular phone, a wireless device, a handset, a mobile unit, a vehicle-mounted device, a network device, a cloud device, an artificial intelligence device, a machine device, a home device, a medical device, an industrial device, or the like.

FIG. 11 is a schematic structural diagram of a terminal device. For ease of description, FIG. 11 shows only main components of the terminal device. As shown in FIG. 11, the terminal device 1100 includes a processor, a memory, a control circuit, an antenna, and an input/output apparatus. The processor is mainly configured to process a communication protocol and communication data, control an entire terminal, execute a software program, and process data of the software program. The memory is mainly configured to store a software program and data. A radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display screen, or a keyboard, is mainly configured to receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of an electromagnetic wave by using the antenna. When data is sent to the terminal device, the radio frequency circuit receives a radio frequency signal through the antenna, further converts the radio frequency signal into a baseband signal, and outputs the baseband signal to the processor. The processor converts the baseband signal into data, and processes the data.

For ease of description, FIG. 11 shows only one memory and one processor. In an actual terminal device, there may be a plurality of processors and a plurality of memories. The memory may also be referred to as a storage medium, a storage device, or the like. This is not limited in the embodiments of this application.

In an optional implementation, the processor may include a baseband processor and a central processing unit. The baseband processor is mainly configured to process a communication protocol and communication data. The central processing unit is mainly configured to control the entire terminal device, execute a software program, and process data of the software program. The processor in FIG. 11 integrates functions of the baseband processor and the central processing unit. A person skilled in the art may understand that, the baseband processor and the central processing unit may be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in a storage unit in a form of a software program. The processor executes the software program to implement a baseband processing function.

In an example, the antenna and the control circuit that have receiving and sending functions may be considered as a transceiver module 1101 of the terminal device 1100. As shown in FIG. 11, the terminal device 1100 includes a transceiver module 1101. The transceiver module may also be referred to as a transceiver, a transceiver machine, a transceiver apparatus, a transceiver unit, or the like. Optionally, a component for implementing the receiving function in the transceiver module 1101 may be considered as a receiving module, and a component for implementing the sending function in the transceiver module 1101 may be considered as a sending module. That is, the transceiver module 1101 includes the receiving module and the sending module. For example, the receiving module may also be referred to as a receiver machine, a receiver, a receiver circuit, a receiving unit, or the like, and the sending module may be referred to as a transmitter machine, a transmitter, a transmitter circuit, a sending unit, or the like. Optionally, the receiving module and the sending module may be one integrated module, or may be a plurality of independent modules. The receiving module and the sending module may be located at one geographical location, or may be scattered at a plurality of geographical locations.

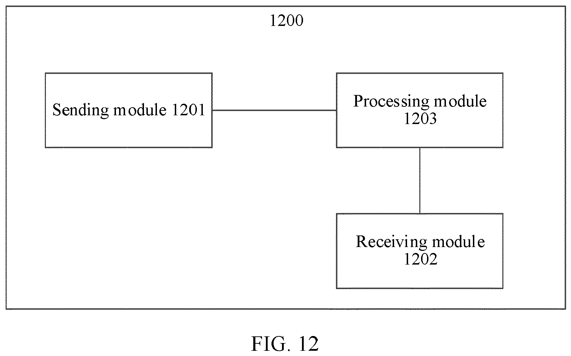

As shown in FIG. 12, another embodiment of this application provides a communication apparatus 1200. The apparatus may be a terminal device; or may be a component (for example, an integrated circuit or a chip) of a terminal device. Alternatively, the apparatus may be a network side device, or may be a component (for example, an integrated circuit or a chip) of a network device. Alternatively, the apparatus may be another communication module configured to implement the methods in the method embodiments of this application. The communication apparatus 1200 may include a sending module 1201, a receiving module 1202, and a processing module 1203.

In a possible design, one or more modules in FIG. 12 may be implemented by one or more processors, or may be implemented by one or more processors and memories, or may be implemented by one or more processors and transceivers, or may be implemented by one or more processors, memories, and transceivers. This is not limited in the embodiments of this application. The processor, the memory, and the transceiver may be disposed separately, or may be integrated.

The communication apparatus 1200 has a function of implementing the terminal device described in the embodiments of this application. For example, the communication apparatus 1200 includes a corresponding module, unit, or means (means) used by the terminal device to perform the steps related to the terminal device and described in the embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment. Alternatively, the communication apparatus 1200 has a function of implementing the network device described in the embodiments of this application. For example, the communication apparatus 1200 includes a corresponding module, unit, or means (means) used by a second network device to perform the steps related to the second network device and described in the embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

Optionally, modules in the communication apparatus 1200 in the embodiments of this application may be configured to perform the methods described in FIG. 2, FIG. 7, FIG. 8, or FIG. 9 in the embodiments of this application, or may be configured to perform a method by combining the methods described in two or more figures.

In a possible design, the communication apparatus 1200 is a network side device, and may include a sending module 1201 and a receiving module 1202. The sending module 1201 may be configured to perform step 201 in the embodiment shown in FIG. 2; step 701, step, and step 703 in the embodiment shown in FIG. 7; step 801 and step 803 in the embodiment shown in FIG. 8; and step 901, step 906, and step 908 in the embodiment shown in FIG. 9. The receiving module 1202 may be configured to perform step 902 in the embodiment shown in FIG. 9. The communication apparatus 1200 further includes a processing module 1203. The processing module 1203 is configured to perform step 903, step 904, and step 905 in the embodiment shown in FIG. 9.

In a possible design, when the communication apparatus 1200 is a terminal device, the communication apparatus may include a sending module 1201 and a receiving module 1202. The sending module 1201 may be configured to perform step 902 in the embodiment shown in FIG. 9. The receiving module 1202 is configured to perform step 202 in the embodiment shown in FIG. 2; or step 702 and step 704 in the embodiment shown in FIG. 7; or step 802 and step 804 in the embodiment shown in FIG. 8. The communication apparatus 1200 further includes a processing module 1203. The processing module 1203 is configured to perform step 907 in the embodiment shown in FIG. 9.

It may be understood that, in some scenarios, some optional features in the embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in the embodiments of this application may also correspondingly implement these features or functions. Details are not described herein again.

A person skilled in the art may further understand that various illustrative logical blocks (illustrative logical blocks) and steps (steps) that are listed in the embodiments of this application may be implemented by using electronic hardware, computer software, or a combination thereof. Whether the functions are implemented by using hardware or software depends on particular applications and a design requirement of an entire system. A person skilled in the art may use various methods to implement the functions for corresponding applications, but it should not be considered that the implementation goes beyond the protection scope of the embodiments of this application.

It may be understood that, the processor in the embodiments of this application may be an integrated circuit chip, and has a signal processing capability. In an implementation process, steps in the foregoing method embodiments may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

The solutions described in this application may be implemented in various manners. For example, the technologies may be implemented by hardware, software, or a combination thereof. For hardware implementation, a processing unit configured to perform these technologies at a communication apparatus (for example, a base station, a terminal, a network entity, or a chip) may be implemented in one or more general-purpose processors, a DSP, a digital signal processor, an ASIC, a programmable logic device, an FPGA or another programmable logic apparatus, a discrete gate or transistor logic device, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these and any memory of another appropriate type.

It may be understood that "an embodiment" mentioned in the entire specification means that particular features, structures, or characteristics related to the embodiment are included in at least one embodiment of this application. Therefore, embodiments in the entire specification are not necessarily same embodiments. In addition, these particular features, structures, or characteristics may be combined in one or more embodiments in any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when", "if", and "in a case that" mean that an apparatus performs corresponding processing in an objective situation, and are not intended to limit time. The terms do not mean that the apparatus is required to have a determining action during implementation, and do not mean any other limitation. "Simultaneously" in this application may be understood as being at a same time point, may be understood as being within a time period, or may be understood as being within a same periodicity.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms " system" and "network" are usually used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

It should be understood that in the embodiments of this application, "B corresponding to A" represents that B is associated with A, and B may be determined based on A. However, it should be understood that determining B based on A does not mean that B is determined based on only A, and B may alternatively be determined based on A and/or other information.

A person of ordinary skill in the art may understand that units and algorithm steps in the examples described with reference to the embodiments disclosed in this specification can be implemented by electronic hardware or a combination of computer software and electronic hardware. Whether the units and algorithm steps are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing described system, apparatus, and unit, refer to a corresponding process in the foregoing method embodiments. Details are not described herein again.

It may be understood that the system, apparatus, and method described in this application may alternatively be implemented in another manner. For example, the described apparatus embodiment is merely an example. For example, the foregoing unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separated, and parts displayed as units may or may not be physical units, may be located in one location, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The storage medium includes any medium that can store program code, such as a USB flash drive, a removable hard disk, a memory, a magnetic disk, or an optical disc.

For same or similar parts in the embodiments of this application, refer to each other. In the embodiments of this application and the implementations/implementation methods in the embodiments, unless otherwise specified or a logical conflict occurs, terms and/or descriptions are consistent and may be mutually referenced between different embodiments and between the implementations/implementation methods in the embodiments. Technical features in the different embodiments and the implementations/implementation methods in the embodiments may be combined to form a new embodiment, implementation, or implementation method according to an internal logical relationship thereof. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1.  A resource scheduling method, applied to a terminal device, the method comprising:

    receiving first configuration information sent by a network side device, wherein the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and
    the first cell and the second cell belong to a same cell group, wherein
    the first cell is a secondary cell in the cell group, and the second cell is a primary cell in the cell group; or the first cell is a secondary cell in the cell group, and the second cell is another secondary cell in the cell group.

2.  The method according to claim 1, further comprising:

    configuring a first radio network temporary identifier RNTI, wherein the first RNTI is used for scrambling a cyclic redundancy check CRC of the DCI of the second cell carried on the at least one PDCCH candidate of the first cell;
    when the cell group is a master cell group MCG, the first cell is at least one secondary cell SCell in the cell group, and the second cell is a primary cell PCell in the cell group, the first RNTI does not belong to an SI-RNTI, a P-RNTI, an RA-RNTI, and a TC-RNTI; and/or
    when the cell group is a secondary cell group SCG, the first cell is at least one secondary cell SCell in the cell group, and the second cell is a primary secondary cell PSCell in the cell group, the first RNTI does not belong to the RA-RNTI or the TC-RNTI.

3.  The method according to claim 1, further comprising:
    receiving second configuration information sent by a network side device, wherein the second configuration information is used for configuring positions of resources of PDCCH candidates of the second cell, and the downlink control information DCI of the second cell is carried on at least one PDCCH candidate of the configured PDCCH candidates of the second cell.

4.  The method according to any one of claims 1 to 3, further comprising:

    configuring a second RNTI, wherein the second RNTI is used for scrambling the CRC of the DCI of the second cell carried on the at least one PDCCH candidate of the second cell;
    when the cell group is an MCG, the first cell is at least one SCell in the cell group, and the second cell is a PCell in the cell group, the second RNTI belongs to at least one of the SI-RNTI, the P-RNTI, the RA-RNTI, and the TC-RNTI; and/or
    when the cell group is an SCG, the first cell is at least one SCell in the cell group, and the second cell is a PSCell in the cell group, the second RNTI belongs to at least one of the RA-RNTI and the TC-RNTI.

5.  The method according to claim 1, further comprising:

    configuring a first RNTI, wherein the first RNTI is used for scrambling a cyclic redundancy check CRC of the DCI of the second cell carried on the at least one PDCCH candidate of the first cell;
    when the cell group is an MCG, the first cell is at least one SCell in the cell group, and the second cell is a PCell in the cell group, the first RNTI belongs to at least one of an SI-RNTI, a P-RNTI, an RA-RNTI, and a TC-RNTI; and/or

when the cell group is an SCG, the first cell is at least one SCell in the cell group, and the second cell is a PSCell in the cell group, the first RNTI belongs to at least one of the RA-RNTI and the TC-RNTI.

6. The method according to claim 1, 2, or 5, wherein when the first cell is a secondary cell in the cell group and the second cell is a primary cell in the cell group, all PDCCH candidates that are capable of carrying the DCI of the second cell are in the first cell.

7. The method according to claim 6, wherein
a quantity of PDCCH candidates that are configured in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device.

8. The method according to any one of claims 3 to 5, wherein

a quantity of PDCCH candidates that are configured in any unit time of the first cell and that carry the DCI of the second cell is allowed to be greater than a PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device; and/or
a quantity of PDCCH candidates that are configured in any unit time of the second cell and that carry the DCI of the second cell is allowed to be greater than the PDCCH candidate monitoring capability of the terminal device, and/or a quantity of non-overlapping control channel elements related to the PDCCH candidates that are configured in any unit time of the second cell and that carry the DCI of the second cell is allowed to be greater than the PDCCH candidate monitoring capability of the terminal device.

9. The method according to claim 3 or 4, wherein
a sum of a quantity of PDCCH candidates that are configured in any unit time of the first cell and that carry the DCI of the second cell and a quantity of PDCCH candidates that are configured in any unit time of the second cell and that carry the DCI of the second cell is allowed to be greater than a PDCCH candidate monitoring capability of the terminal device; and/or a sum of a quantity of non-overlapping control channel elements related to the PDCCH candidates that are configured in any unit time of the first cell and that carry the DCI of the second cell and a quantity of non-overlapping control channel elements related to the PDCCH candidates that are configured in any unit time of the second cell and that carry the DCI of the second cell is allowed to be greater than the PDCCH candidate monitoring capability of the terminal device.

10. The method according to any one of claim 1, 2, or 5, further comprising:

receiving first indication information sent by the network side device, wherein
if the first indication information indicates a first value, the first indication information indicates that a quantity of PDCCH candidates that are configured by the terminal device in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device; and
if the first indication information indicates a second value, the first indication information indicates that the quantity of PDCCH candidates that are configured by the terminal device in any unit time of the first cell and that carry the DCI of the second cell is allowed to be greater than the PDCCH candidate monitoring capability of the terminal device, and/or the quantity of non-overlapping control channel elements related to the PDCCH candidates that are configured in any unit time of the first cell and that carry the DCI of the second cell is allowed to be greater than the PDCCH candidate monitoring capability of the terminal device.

11. The method according to any one of claim 1, 3, or 4, wherein the downlink control information DCI of the second cell is carried on at least one PDCCH candidate of the configured PDCCH candidates of the first cell and the configured PDCCH candidates of the second cell, and the method further comprises:

receiving first parameter information sent by the network side device, wherein the first parameter information is used for configuring the first cell and the second cell as $r$ cells to perform PDCCH candidate monitoring capability allocation, and $r$ is a positive number.

12. The method according to any one of claim 1, 3, or 4, wherein the downlink control information DCI of the second cell is carried on at least one PDCCH candidate of the configured PDCCH candidates of the first cell and the configured PDCCH candidates of the second cell, and the method further comprises:
receiving second parameter information sent by the network side device, wherein the second parameter information is used for configuring the first cell as $r_1$ cells to perform PDCCH candidate monitoring capability allocation, and configuring the second cell as $r_2$ cells to perform PDCCH candidate monitoring capability allocation, wherein $r_1$ and $r_2$ are positive numbers.

13. The method according to claim 11 or 12, wherein

a subcarrier spacing of an active bandwidth part BWP of the first cell is $\mu_1$, and a PDCCH candidate of the first cell that is available for carrying the DCI of the second cell is used as $r_1$ cells whose subcarrier spacing is $\mu_1$ to perform PDCCH candidate monitoring capability allocation; and
a subcarrier spacing of an active bandwidth part BWP of the second cell is $\mu_2$, and a PDCCH candidate of the second cell that is available for carrying the DCI of the second cell is used as $r_2$ cells whose subcarrier spacing is $\mu_2$ to perform PDCCH candidate monitoring capability allocation, wherein
$\mu_1$ and $\mu_2$ are equal or not equal.

14. A resource scheduling method, applied to a network side device, the method comprising:

sending first configuration information to a terminal device, wherein the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell; and
the first cell and the second cell belong to a same cell group, wherein
the first cell is a secondary cell in the cell group, and the second cell is a primary cell in the cell group; or the first cell is a secondary cell in the cell group, and the second cell is another secondary cell in the cell group; or the first cell is a primary cell in the cell group, and the second cell is a secondary cell in the cell group.

15. The method according to claim 14, further comprising:

configuring a first radio network temporary identifier RNTI, wherein the first RNTI is used for scrambling a cyclic redundancy check CRC of the DCI of the second cell carried on the at least one PDCCH candidate of the first cell; when the cell group is a master cell group MCG, the first cell is at least one secondary cell SCell in the cell group, and the second cell is a primary cell PCell in the cell group, the first RNTI does not belong to an SI-RNTI, a P-RNTI, an RA-RNTI, and a TC-RNTI; and/or
when the cell group is a secondary cell group SCG, the first cell is at least one secondary cell SCell in the cell group, and the second cell is a primary secondary cell PSCell in the cell group, the first RNTI does not belong to the RA-RNTI or the TC-RNTI.

16. The method according to claim 14, further comprising:
sending second configuration information to the terminal device, wherein the second configuration information is used for configuring positions of resources of PDCCH candidates of the second cell, and the downlink control information DCI of the second cell is carried on at least one PDCCH candidate of the configured PDCCH candidates of the second cell.

17. The method according to any one of claims 14 to 16, further comprising:

configuring a second RNTI, wherein the second RNTI is used for scrambling the CRC of the DCI of the second cell carried on the at least one PDCCH candidate of the second cell;
when the cell group is an MCG, the first cell is at least one SCell in the cell group, and the second cell is a PCell in the cell group, the second RNTI belongs to at least one of the SI-RNTI, the P-RNTI, the RA-RNTI, and the TC-RNTI; and/or

when the cell group is an SCG, the first cell is at least one SCell in the cell group, and the second cell is a PSCell in the cell group, the second RNTI belongs to at least one of the RA-RNTI and the TC-RNTI.

18. The method according to claim 14, further comprising:

configuring a first RNTI, wherein the first RNTI is used for scrambling a CRC of the DCI of the second cell carried on the at least one PDCCH candidate of the first cell;
when the cell group is an MCG, the first cell is at least one SCell in the cell group, and the second cell is a PCell in the cell group, the first RNTI belongs to at least one of an SI-RNTI, a P-RNTI, an RA-RNTI, and a TC-RNTI; and/or
when the cell group is an SCG, the first cell is at least one SCell in the cell group, and the second cell is a PSCell in the cell group, the first RNTI belongs to at least one of the RA-RNTI and the TC-RNTI.

19. The method according to any one of claim 14, 15, or 18, wherein when the first cell is a secondary cell in the cell group and the second cell is a primary cell in the cell group, all PDCCH candidates that are capable of carrying the DCI of the second cell are in the first cell.

20. The method according to claim 19, wherein
a quantity of PDCCH candidates that are configured in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device.

21. The method according to claims 16 to 18, wherein

a quantity of PDCCH candidates that are configured in any unit time of the first cell and that carry the DCI of the second cell is allowed to be greater than a PDCCH candidate monitoring capability of the terminal device, and/or a quantity of non-overlapping control channel elements related to the PDCCH candidates that are configured in any unit time of the first cell and that carry the DCI of the second cell is allowed to be greater than the PDCCH candidate monitoring capability of the terminal device; and/or
a quantity of PDCCH candidates that are configured in any unit time of the second cell and that carry the DCI of the second cell is allowed to be greater than the PDCCH candidate monitoring capability of the terminal device, and/or a quantity of non-overlapping control channel elements related to the PDCCH candidates that are configured in any unit time of the second cell and that carry the DCI of the second cell is allowed to be greater than the PDCCH candidate monitoring capability of the terminal device.

22. The method according to claim 16 or 17, wherein
a sum of a quantity of PDCCH candidates that are configured in any unit time of the first cell and that carry the DCI of the second cell and a quantity of PDCCH candidates that are configured in any unit time of the second cell and that carry the DCI of the second cell is allowed to be greater than a PDCCH candidate monitoring capability of the terminal device; and/or a sum of a quantity of non-overlapping control channel elements related to the PDCCH candidates that are configured in any unit time of the first cell and that carry the DCI of the second cell and a quantity of non-overlapping control channel elements related to the PDCCH candidates that are configured in any unit time of the second cell and that carry the DCI of the second cell is allowed to be greater than the PDCCH candidate monitoring capability of the terminal device.

23. The method according to claim 14, 15, or 18, further comprising:

sending first indication information to the terminal device, wherein
if the first indication information indicates a first value, the first indication information indicates that a quantity of PDCCH candidates that are configured by the terminal device in any unit time of the first cell and that carry the DCI of the second cell is less than or equal to a PDCCH candidate monitoring capability of the terminal device, and/or a quantity of non-overlapping control channel elements related to the PDCCH candidates that are configured in any unit time of the first cell and that carry the DCI of the second cell is less than or equal to the PDCCH candidate monitoring capability of the terminal device; and
if the first indication information indicates a second value, the first indication information indicates that the quantity of PDCCH candidates that are configured by the terminal device in any unit time of the first cell and that carry the DCI of the second cell is allowed to be greater than the PDCCH candidate monitoring capability of the terminal device, and/or the quantity of non-overlapping control channel elements related to the PDCCH candidates that are configured in any unit time of the first cell and that carry the DCI of the second cell is allowed to be greater than the PDCCH candidate monitoring capability of the terminal device.

24. The method according to any one of claim 14, 16, or 17, wherein the downlink control information DCI of the second cell is carried on at least one PDCCH candidate of the configured PDCCH candidates of the first cell and the configured PDCCH candidates of the second cell, and the method further comprises:
sending first parameter information to the terminal device, wherein the first parameter information is used for configuring the first cell and the second cell as $r$ cells to perform PDCCH candidate monitoring capability allocation, and $r$ is a positive number.

25. The method according to any one of claim 14, 16, or 17, wherein the downlink control information DCI of the second cell is carried on at least one PDCCH candidate of the configured PDCCH candidates of the first cell and the configured PDCCH candidates of the second cell, and the method further comprises:
sending second parameter information to the terminal device, wherein the second parameter information is used for configuring the first cell as $r_1$ cells to perform PDCCH candidate monitoring capability allocation, and configuring the second cell as $r_2$ cells to perform PDCCH candidate monitoring capability allocation, wherein $r_1$ and $r_2$ are positive numbers.

26. The method according to claim 24 or 25, wherein

a subcarrier spacing of an active bandwidth part BWP of the first cell is $\mu_1$, and a PDCCH candidate of the first cell that is available for carrying the DCI of the second cell is used as $r_1$ cells whose subcarrier spacing is $\mu_1$ to perform PDCCH candidate monitoring capability allocation; and
a subcarrier spacing of an active bandwidth part BWP of the second cell is $\mu_2$, and a PDCCH candidate of the second cell that is available for carrying the DCI of the second cell is used as $r_2$ cells whose subcarrier spacing is $\mu_2$ to perform PDCCH candidate monitoring capability allocation, wherein $\mu_1$ and $\mu_2$ are equal or not equal.

27. A communication apparatus, comprising a processor, wherein the processor is coupled to a memory, the memory is configured to store a program or instructions, and when the processor executes the program or instructions, the apparatus is caused to perform the method according to any one of claims 1 to 13 or perform the method according to any one of claims 14 to 26.

28. A computer-readable storage medium, storing a computer program, wherein when the computer program is executed, a computer is caused to perform the method according to any one of claims 1 to 13 or perform the method according to any one of claims 14 to 26.

29. A chip, comprising a processor, wherein the processor is coupled to a memory, the memory is configured to store a program, and when the computer executes the program, an apparatus comprising the chip is caused to perform the method according to any one of claims 1 to 13 or perform the method according to any one of claims 14 to 26.

Search space 1    Search space 2

f

CORESET

FIG. 1(a)

Core network
device 110

Radio access
network device 120

Terminal
device 130

Terminal
device 140

FIG. 1(b)

Network side
device

Terminal
device

201. Send first configuration
information

202. Receive the first configuration information sent by the network side device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell

FIG. 2

PCell

SCell

MCG

PDCCH

PDCCH (An RNTI used for scrambling a CRC of DCI of a carried PCell does not belong to an SI-RNTI, a P-RNTI, an RA-RNTI, and a TC-RNTI)

PSCell

SCell

SCG

PDCCH

PDCCH (An RNTI used for scrambling a CRC of DCI of a carried PSCell does not belong to an RA-RNTI and a TC-RNTI)

FIG. 3

PCell

SCell

MCG

PDCCH (An RNTI used for scrambling a CRC of DCI of a PCell belongs to at least one of an SI-RNTI, a P-RNTI, an RA-RNTI, and a TC-RNTI)

PDCCH (An RNTI used for scrambling a CRC of DCI of a carried PCell does not belong to an SI-RNTI, a P-RNTI, an RA-RNTI, and a TC-RNTI)

PDCCH (An RNTI used for scrambling a CRC of DCI of a carried PSCell belongs to at least one of an RA-RNTI and a TC-RNTI)

PSCell

SCell

SCG

PDCCH (An RNTI used for scrambling a CRC of DCI of a carried PSCell does not belong to an RA-RNTI and a TC-RNTI)

FIG. 4

PDCCH (An RNTI used for scrambling a CRC of DCI of a carried PCell does not belong to an SI-RNTI, a P-RNTI, an RA-RNTI, and a TC-RNTI)

PDCCH (An RNTI used for scrambling a CRC of DCI of a carried PSCell does not belong to an RA-RNTI and a TC-RNTI)

PCell

SCell

MCG

PSCell

SCell

SCG

FIG. 5

PCell

SCell

MCG

PDCCH

PSCell

SCell

SCG

PDCCH

FIG. 6

Network side
device

Terminal
device

701. Send first parameter information

702. Receive the first parameter information sent by the network side device, where the first parameter information is used for configuring a first cell and a second cell as $r$ cells to perform PDCCH candidate monitoring capability allocation

703. Send first configuration information

704. Receive the first configuration information sent by the network side device, where the first configuration information is used for configuring positions of resources of downlink control channel PDCCH candidates of a first cell, downlink control information DCI of a second cell is carried on at least one PDCCH candidate of the configured PDCCH candidates of the first cell, and the DCI of the second cell is used for scheduling positions of resources for the terminal device to perform data communication in the second cell

FIG. 7

Network side
device

Terminal
device

801. Send second parameter information

802. Receive the second parameter information, where the
second parameter information is used for configuring a first cell
as $r_1$ cells to perform PDCCH candidate monitoring capability
allocation, and configuring a second cell as $r_2$ cells to perform
PDCCH candidate monitoring capability allocation

803. Send first configuration information

804. Receive the first configuration information sent by the
network side device, where the first configuration information is
used for configuring positions of resources of downlink control
channel PDCCH candidates of the first cell, downlink control
information DCI of the second cell is carried on at least one
PDCCH candidate of the configured PDCCH candidates of the
first cell, and the DCI of the second cell is used for scheduling
positions of resources for the terminal device to perform data
communication in the second cell

FIG. 8

Network
side device

Terminal
device

901. Perform cell configuration

902. Report a monitoring
capability parameter

903. Determine a PDCCH candidate
monitoring capability of the terminal
device based on the monitoring capability
parameter reported by the terminal device

904. If a quantity of cells configured
is less than or equal to the PDCCH
candidate monitoring capability of
the terminal device, it is determined
that an upper limit of the PDCCH
candidate monitoring capability of
the terminal device in each cell is a
value specified in a protocol

905. If the quantity of cells
configured is greater than the
PDCCH candidate
monitoring capability of the
terminal device, PDCCH
candidate monitoring
capability allocation is
performed

906. Configure positions of resources
of PDCCH candidates of the terminal
device in a cell based on the PDCCH
candidate monitoring capability of the
terminal device

907. If overbooking occurs,
perform overbooking
processing in a cell in which
overbooking occurs

908. Send a PDCCH in the
configured PDCCH candidates

FIG. 9

1000

1001

Processor

Instructions

1003

1002

Memory

Instructions

1004

Transceiver

1005

Antenna

1006

FIG. 10

1111

Antenna

Control circuit

1100

Memory

Processor

1112

Input/Output apparatus

FIG. 11

1200

Sending module 1201 — Processing module 1203

Receiving module 1202

FIG. 12

## INTERNATIONAL SEARCH REPORT

| International application No. |
| --- |
| **PCT/CN2020/107562** |

**A.    CLASSIFICATION OF SUBJECT MATTER**

H04L 5/00(2006.01)i;  H04W 72/12(2009.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 主小区, 辅小区, 跨载波, 调度, 配置, 下行控制信道, 候选, 搜索空间, primary, secondary, cell, cross, carrier, schedule, configure, PDCCH, DCI, search space, candidate

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111132344 A (BEIJING SPREADTRUM HIGH-TECH COMMUNICATIONS TECHNOLOGY CO., LTD.) 08 May 2020 (2020-05-08) description paragraphs [0095]-[0207] | 1-29 |
| X | CN 111132359 A (BEIJING SPREADTRUM HIGH-TECH COMMUNICATIONS TECHNOLOGY CO., LTD.) 08 May 2020 (2020-05-08) description paragraphs [0077]-[0155] | 1-29 |
| A | CN 110475356 A (VIVO COMMUNICATION TECHNOLOGY CO., LTD.) 19 November 2019 (2019-11-19) entire document | 1-29 |
| A | CN 110830216 A (HUAWEI TECHNOLOGIES CO., LTD.) 21 February 2020 (2020-02-21) entire document | 1-29 |
| A | CN 111279767 A (LENOVO (BEIJING) LIMITED) 12 June 2020 (2020-06-12) entire document | 1-29 |
| A | WO 2019196750 A1 (FG INNOVATION IP COMPANY LTD.) 17 October 2019 (2019-10-17) entire document | 1-29 |

☐ Further documents are listed in the continuation of Box C.        ☑ See patent family annex.

| | |
| --- | --- |
| *      Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| **04 April 2021** | **26 April 2021** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**EP 4 187 827 A1**

**INTERNATIONAL SEARCH REPORT**
Information on patent family members

International application No.

**PCT/CN2020/107562**

| Patent document cited in search report | | | Publication date (day/month/year) | Patent family member(s) | | | Publication date (day/month/year) |
|---|---|---|---|---|---|---|---|
| CN | 111132344 | A | 08 May 2020 | None | | | |
| CN | 111132359 | A | 08 May 2020 | None | | | |
| CN | 110475356 | A | 19 November 2019 | None | | | |
| CN | 110830216 | A | 21 February 2020 | WO | 2020029945 | A1 | 13 February 2020 |
| CN | 111279767 | A | 12 June 2020 | EP | 3669598 | A1 | 24 June 2020 |
| | | | | WO | 2019033389 | A1 | 21 February 2019 |
| | | | | US | 2020235891 | A1 | 23 July 2020 |
| | | | | IN | 202037002931 | A | 28 February 2020 |
| WO | 2019196750 | A1 | 17 October 2019 | US | 2019313390 | A1 | 10 October 2019 |
| | | | | US | 10863511 | B2 | 08 December 2020 |
| | | | | US | 2019313429 | A1 | 10 October 2019 |
| | | | | WO | 2019196751 | A1 | 17 October 2019 |
| | | | | EP | 3777407 | A1 | 17 February 2021 |

Form PCT/ISA/210 (patent family annex) (January 2015)